# EUROPEAN PATENT APPLICATION

(11) **EP 4 848 047 A1**
(43) Date of publication of application: **02.12.2026**
(21) Application number: 26169993.8
(22) Date of filing: 31.03.2026
(51) Int. Cl.: G06F 3/041, G06F 3/044, G06F 3/046

(54) **ELECTRONIC DEVICE**

(30) Priority: 28.05.2025 KR 20250069402
(71) Applicant: Samsung Display Co., Ltd, Yongin-si, Gyeonggi-Do (KR)
(72) Inventor: KIM, Hyungbae, Yongin-si (KR); LIM, Sanghyun, Yongin-si (KR)
(74) Representative: Marks & Clerk LLP

(57) **Abstract**

An electronic device includes: a display layer; a sensor layer on the display layer, wherein an active area and a non-active area are in the display layer; and a sensor driving unit configured to drive the sensor layer, wherein the sensor layer includes: a plurality of first electrodes in the active area and extending in a first direction; a plurality of second electrodes in the active area and extending in a second direction intersecting the first direction; a plurality of auxiliary electrodes in the active area, extending in the first direction, and insulated from the plurality of second electrodes; and an outer electrode in the non-active area and around a portion of the active area, wherein the sensor driving unit is configured to operate in a first mode of sensing a touch or in a second mode of sensing an external input device.

## Description

### BACKGROUND

Embodiments of the present disclosure described herein relate to an electronic device capable of sensing an input by a pen.

A multimedia electronic device such as a television (TV), a mobile phone, a tablet computer, a notebook, a navigation system, or a game console includes a display device for displaying an image. In addition to a general input device such as a button, a keyboard, or a mouse, an electronic device may include a sensor layer (or an input sensor) capable of providing a touch-based input manner that allows a user to enter information or a command easily and intuitively. The sensor layer may sense a user touch or pressure. Meanwhile, for the user who is accustomed to enter information by using writing instruments or for a specific application (e.g. an application program for sketching or drawing), there is an increasing demand for using a pen for a fine touch input.

### SUMMARY

Embodiments of the present disclosure provide an electronic device capable of sensing an input by a pen.

According to one or more embodiments, an electronic device includes: a display layer; a sensor layer on the display layer, wherein an active area and a non-active area are in the display layer; and a sensor driving unit configured to drive the sensor layer, wherein the sensor layer includes: a plurality of first electrodes in the active area and extending in a first direction; a plurality of second electrodes in the active area and extending in a second direction intersecting the first direction; a plurality of auxiliary electrodes in the active area, extending in the first direction, and insulated from the plurality of second electrodes; and an outer electrode in the non-active area and around a portion of the active area, wherein the sensor driving unit is configured to operate in a first mode of sensing a touch or in a second mode of sensing an external input device, wherein the second mode includes a charging mode and a sensing mode, and wherein, in the sensing mode, the sensor driving unit is configured to receive a first sensing signal through one of the plurality of second electrodes and to receive a second sensing signal through the outer electrode.

According to one or more embodiments, in the sensing mode, the sensor driving unit is configured to perform differential sensing on the one of the plurality of second electrodes and the outer electrode.

According to one or more embodiments, each of the plurality of second electrodes has a mesh structure, and wherein the outer electrode has a solid structure.

According to one or more embodiments, the sensor layer further includes: a plurality of trace lines in the non-active area and respectively connected to the plurality of second electrodes.

According to one or more embodiments, a maximum width of the outer electrode is greater than a maximum width of each of the plurality of trace lines.

According to one or more embodiments, a first resistance of the outer electrode is greater than a second resistance of the one of the plurality of second electrodes.

According to one or more embodiments, the sensor layer further includes: a lower-end electrode in the non-active area and located adjacent to a remaining portion of the active area.

According to one or more embodiments, the electronic device further includes: a main circuit board on which the sensor driving unit is mounted; a first connection film electrically connected between the main circuit board and the sensor layer and including a plurality of first pads connected to the main circuit board; and a second connection film electrically connected between the main circuit board and the sensor layer and including a plurality of second pads connected to the main circuit board.

According to one or more embodiments, the lower-end electrode includes a plurality of electrode portions arranged along the second direction, and wherein the plurality of electrode portions are electrically connected to each other.

According to one or more embodiments, a first end of one of the plurality of electrode portions is connected to one of the plurality of first pads, and a second end of the one of the plurality of electrode portions is connected to one of the plurality of second pads, and wherein a first end of another one of the plurality of electrode portions is connected to another one of the plurality of second pads.

According to one or more embodiments, the one and the another one of the plurality of second pads are connected and adjacent to each other.

According to one or more embodiments, the main circuit board includes a connection line connecting the one and the another one of the plurality of second pads.

According to one or more embodiments, the first connection film and the second connection film are spaced from each other in the second direction, wherein a first end of the lower-end electrode is connected to one of the plurality of first pads, and wherein a second end of the lower-end electrode is connected to one of the plurality of second pads.

According to one or more embodiments, the sensor layer further includes a blocking electrode.

According to one or more embodiments, the blocking electrode is around the outer electrode.

According to one or more embodiments, wherein, in a plan view, the blocking electrode overlaps the outer electrode.

According to one or more embodiments, the blocking electrode includes a plurality of blocking electrodes, and wherein the plurality of blocking electrodes are spaced from each other in the second direction.

According to one or more embodiments, in the first mode and the charging mode, a ground voltage is provided to the outer electrode.

According to one or more embodiments, an electronic device includes: a display layer; and a sensor layer on the display layer, wherein an active area and a non-active area are in the display layer, wherein the sensor layer includes: a plurality of first electrodes in the active area and extending in a first direction; a plurality of second electrodes in the active area and extending in a second direction intersecting the first direction; a plurality of auxiliary electrodes in the active area, extending in the first direction, and insulated from the plurality of second electrodes; and an outer electrode in the non-active area and around a portion of the active area, wherein each of the plurality of second electrodes has a mesh structure, wherein the outer electrode has a solid structure, and wherein a first resistance of the outer electrode is greater than a second resistance of each of the plurality of second electrodes.

According to one or more embodiments, the sensor layer further includes: a plurality of trace lines in the non-active area and respectively connected to the plurality of second electrodes, and wherein a maximum width of the outer electrode is greater than a maximum width of each of the plurality of trace lines.

At least some of the above and other features of the invention are set out in the claims.

### BRIEF DESCRIPTION OF THE DRAWINGS

The above and other aspects and features of embodiments of the present disclosure will become apparent by describing in detail embodiments thereof with reference to the accompanying drawings.
FIG. 1 is a block diagram of an electronic device according to one or more embodiments of the present disclosure.
FIG. 2 illustrates schematic views of electronic devices according to various embodiments.
FIG. 3A is a perspective view of an electronic device according to one or more embodiments of the present disclosure.
FIG. 3B is a rear perspective view of an electronic device according to one or more embodiments of the present disclosure.
FIG. 4 is a perspective view of an electronic device according to one or more embodiments of the present disclosure.
FIG. 5 is a perspective view of an electronic device according to one or more embodiments of the present disclosure.
FIG. 6 is a cross-sectional view illustrating a display module according to one or more embodiments of the present disclosure.
FIG. 7 is a diagram for describing an operation of an electronic device according to one or more embodiments of the present disclosure.
FIG. 8 is a cross-sectional view of a display module according to one or more embodiments of the present disclosure.
FIG. 9 is a cross-sectional view illustrating a partial configuration of a sensor layer according to one or more embodiments of the present disclosure.
FIG. 10 is a plan view of a sensor layer according to one or more embodiments of the present disclosure.
FIG. 11 is an enlarged plan view of an area AA' of FIG. 10 according to an embodiment of the present disclosure.
FIG. 12 is an enlarged plan view illustrating one sensing unit according to one or more embodiments of the present disclosure.
FIG. 13A is a plan view illustrating a first conductive layer of a sensing unit according to one or more embodiments of the present disclosure.
FIG. 13B is a plan view illustrating a second conductive layer of a sensing unit according to one or more embodiments of the present disclosure.
FIG. 13C is an enlarged plan view of an area BB' illustrated in FIG. 13B.
FIG. 13D is a cross-sectional view of a sensor layer taken along the line I- I' of each of FIGS. 13A and 13B.
FIG. 14A is a plan view illustrating a first conductive layer of a sensing unit according to one or more embodiments of the present disclosure.
FIG. 14B is a plan view illustrating a second conductive layer of a sensing unit according to one or more embodiments of the present disclosure.
FIG. 14C is a cross-sectional view of a sensor layer according to one or more embodiments of the present disclosure, which is taken along the line II-II' illustrated in each of FIGS. 14A and 14B.
FIG. 15 partially illustrates an electronic device according to one or more embodiments of the present disclosure.
FIG. 16 partially illustrates an electronic device according to one or more embodiments of the present disclosure.
FIG. 17 partially illustrates an electronic device according to one or more embodiments of the present disclosure.
FIG. 18 partially illustrates an electronic device according to one or more embodiments of the present disclosure.
FIG. 19 partially illustrates an electronic device according to one or more embodiments of the present disclosure.
FIG. 20A is a cross-sectional view of a sensor layer taken along the line III-III' of FIG. 19 according to an embodiment of the present disclosure.
FIG. 20B is a cross-sectional view of a sensor layer taken along a line corresponding to the line III-III' of FIG. 19 according to one or more embodiments of the present disclosure.
FIG. 21 illustrates an operation of a sensor driving unit according to one or more embodiments of the present disclosure.
FIG. 22 illustrates an operation of a sensor driving unit according to one or more embodiments of the present disclosure.
FIG. 23 illustrates a sensor layer and a sensor driving unit for describing a first mode according to one or more embodiments of the present disclosure.
FIG. 24 illustrates a sensor layer and a sensor driving unit for describing a first mode according to one or more embodiments of the present disclosure.
FIG. 25A illustrates a sensing unit according to one or more embodiments of the present disclosure.
FIG. 25B illustrates a sensing part according to one or more embodiments of the present disclosure.
FIG. 26 illustrates a sensor layer and a sensor driving unit for describing a second mode according to one or more embodiments of the present disclosure.
FIGS. 27A and 27B are graphs of waveforms of a first signal and a second signal according to one or more embodiments of the present disclosure.
FIG. 28 illustrates a sensor layer and a sensor driving unit for describing a second mode according to one or more embodiments of the present disclosure.
FIG. 29 is a diagram illustrating a magnitude and a direction of an induced current generated at a pen and first electrodes according to one or more embodiments of the present disclosure.
FIG. 30 illustrates a sensor layer and a sensor driving unit for describing a second mode according to one or more embodiments of the present disclosure.
FIG. 31 is a diagram illustrating a sensor layer to describe a method of sensing an x-coordinate in a second mode according to one or more embodiments of the present disclosure.
FIG. 32 is a graph illustrating a current obtained from a differential pair of first channels according to one or more embodiments of the present disclosure.
FIG. 33 is a diagram illustrating a magnitude and a direction of an induced current generated at a pen, second electrodes, and an outer electrode according to one or more embodiments of the present disclosure.
FIG. 34 illustrates a sensor layer and a sensor driving unit for describing a second mode according to one or more embodiments of the present disclosure.
FIG. 35 is a graph illustrating a pen position-specific magnetic flux according to one or more embodiments of the present disclosure.
FIG. 36 is a diagram illustrating a sensor layer to describe a method of sensing an y-coordinate in a second mode according to one or more embodiments of the present disclosure.
FIG. 37 is a graph illustrating a current obtained from a differential pair of second channels according to one or more embodiments of the present disclosure.
FIG. 38 illustrates a sensor layer and a sensor driving unit for describing a second mode according to one or more embodiments of the present disclosure.

### DETAILED DESCRIPTION

In the specification, the expression that a first component (or an area, a layer, a part, or a portion) is "on", "connected to", or "coupled to" a second component means that the first component is directly on/connected to/coupled to the second component or means that a third component is interposed therebetween.

The same reference numerals/signs refer to the same components. In addition, in drawings, thicknesses, proportions, and dimensions of components may be exaggerated to describe the technical features effectively. The expression "and/or" includes one or more combinations which associated components are capable of defining.

Even though the terms "first", "second", etc. may be used to describe various components, the components should not be construed as being limited by the terms. The terms are used only for the purpose of distinguishing one component, part, area, layer, or portion from another component, part, area, layer, or portion. For example, a first component, a first part, a first area, a first layer, or a first portion may be named a second component, a second part, a second area, a second layer, or a second portion, and similarly, the second component, the second part, the second area, the second layer, or the second portion may be named the first component, the first part, the first area, the first layer, or the first portion. The articles "a", "an", and "the" are singular in that they have a single referent, but the use of the singular form should not preclude the presence of more than one referent.

Also, the terms "under", "below", "on", "above", etc. are used to describe the correlation of components illustrated in drawings. The terms that are relative in concept are described based on a direction shown in drawings.

It will be understood that the terms "include", "comprise", "have", etc. specify the presence of features, numbers, steps, operations, elements, or components, described in the specification, or a combination thereof, not precluding the presence or additional possibility of one or more other features, numbers, steps, operations, elements, or components or a combination thereof.

Unless otherwise defined, all terms (including technical terms and scientific terms) used in the specification have the same meaning as commonly understood by one skilled in the art to which the present disclosure belongs. In addition, the terms such as terms defined in the dictionaries commonly used should be interpreted as having a meaning consistent with the meaning in the context of the related technology, and should not be interpreted in ideal or overly formal meanings unless explicitly defined herein.

Hereinafter, embodiments of the present disclosure will be described with reference to accompanying drawings.

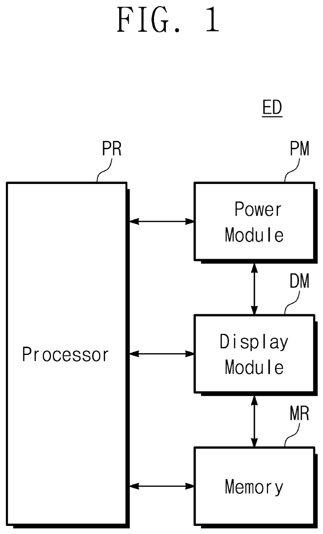

FIG. 1 is a block diagram of an electronic device according to one or more embodiments of the present disclosure.

An electronic device according to one or more embodiments of the present disclosure may be provided in various forms/shapes. The electronic device according to one or more embodiments of the present disclosure may further include a module or device which has any other additional functions.

Referring to FIG. 1, an electronic device ED according to one or more embodiments may include a display module DM, a processor PR, a memory MR, and a power module PM.

The processor PR may include at least one of a central processing unit (CPU), an application processor (AP), a graphic processing unit (GPU), a communication processor (CP), an image signal processor (ISP), or a controller. The processor PR may control the power module PM, the display module DM, and the memory MR.

Data information necessary for operations of the processor PR or the display module DM may be stored in the memory MR. When the processor PR executes an application stored in the memory MR, an image data signal and/or an input control signal may be transferred to the display module DM, and the display module DM may process the provided signal to output image information through a display screen.

The power module PM may include a power supply module such as a power adapter and/or a battery device and a power conversion module that converts the power supplied by the power supply module to generate the power necessary for operations of the electronic device ED.

The display module DM may operate based on an electrical signal. Some of individual modules that are functionally included in one module may be included in the display module DM, and the others thereof may be provided in the electronic device ED independently of the display module DM.

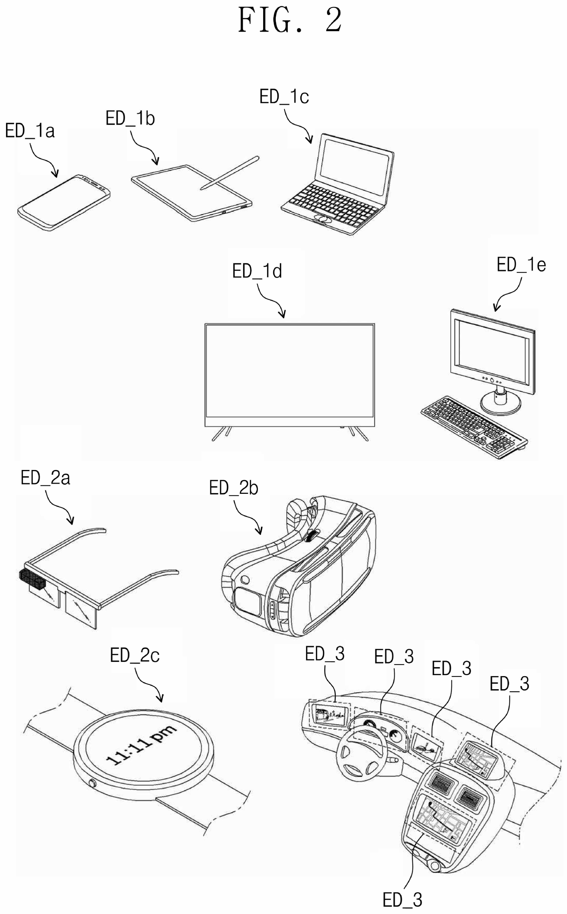

FIG. 2 illustrates schematic views of electronic devices according to various embodiments.

Referring to FIG. 2, an electronic device according to various embodiments may be a wearable electronic device including a display module such as smart glasses ED-2a, a head-mounted display ED-2b, and a smart watch ED-2c, as well as an electronic device for image display such as a smartphone ED-1a, a tablet PC ED-1b, a laptop ED-1c, a TV ED-1d, and a desk monitor ED-1e.

Also, the electronic device according to various embodiments may be applied within a transport device such as a vehicle and may provide various information to the user through an image. For example, the electronic device according to the present disclosure may be provided in the form of an automotive electronic device ED-3 including display modules such as an instrument panel, a center fascia, a center information display (CID) disposed on a dashboard, and a room mirror display of a vehicle.

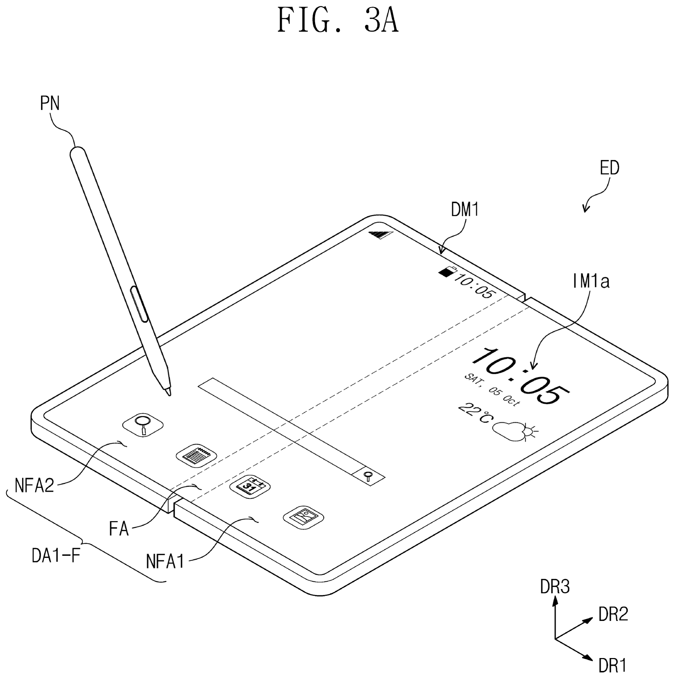

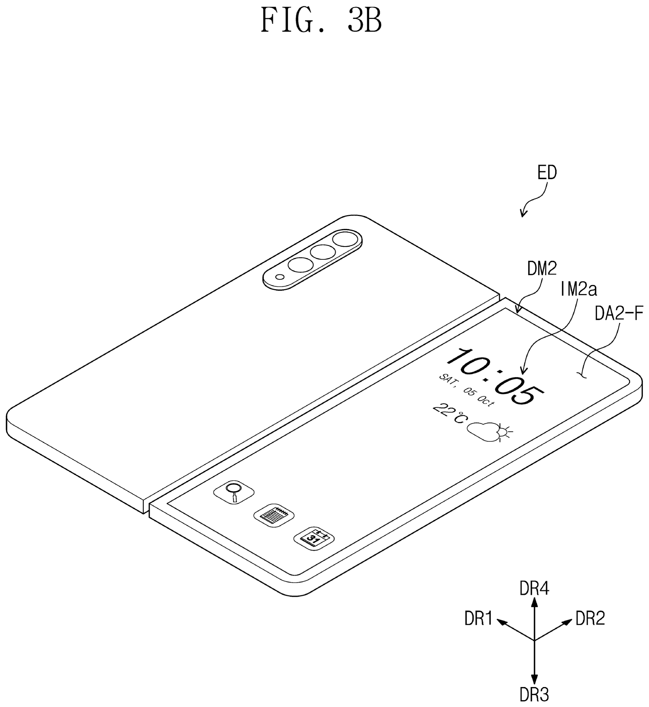

FIG. 3A is a perspective view of an electronic device according to one or more embodiments of the present disclosure. FIG. 3B is a rear perspective view of an electronic device according to one or more embodiments of the present disclosure.

Referring to FIGS. 3A and 3B, the electronic device ED may refer to a device that is activated depending on an electrical signal. For example, the electronic device ED may display an image and may sense inputs applied from the outside. The external input may be an input of the user. The input of the user may include various types of external inputs such as a part of a user's body, a pen PN, a light, heat, and a pressure.

The electronic device ED may include a first display module DM1 and a second display module DM2. The first display module DM1 and the second display module DM2 may be independent panels separated from each other. The first display module DM1 may be referred to as a "main display panel", and the second display module DM2 may be referred to as an "auxiliary display panel" or an "external display panel".

The first display module DM1 may module a first display part DA1-F, and the second display module DM2 may include a second display part DA2-F. The area of the second display module DM2 may be smaller than the area of the first display module DM1. The area of the first display part DA1-F, which corresponds to the size of the first display module DM1, may be larger than the area of the second display part DA2-F that corresponds to the size of the second display module DM2.

The first display part DA1-F may have the plane substantially parallel to a first direction DR1 and a second direction DR2, with the electronic device ED unfolded. A thickness direction of the electronic device ED may be parallel to a third direction DR3 intersecting the first direction DR1 and the second direction DR2. Accordingly, front surfaces (or upper surfaces) and bottom surfaces (or lower surfaces) of members constituting the electronic device ED may be defined with respect to the third direction DR3. It will be understood that the directions discussed herein are example directions expressed relative to the device, and do not imply any particular orientation.

The first display module DM1 or the first display part DA1-F may include a folding area FA that is folded and/or unfolded, and a plurality of non-folding areas NFA1 and NFA2 spaced (e.g., spaced apart) from each other, with the folding area FA interposed therebetween. The second display module DM2 may overlap one of the plurality of non-folding areas NFA1 and NFA2. For example, the second display module DM2 may overlap the first non-folding area NFA1.

A display direction of a first image IM1a that is displayed in a portion of the first display module DM1, for example, in the first non-folding area NFA1 may face away from a display direction of a second image IM2a that is displayed in the second display module DM2. For example, the first image IM1a may be displayed in the third direction DR3, and the second image IM2a may be displayed in a fourth direction DR4 facing away from the third direction DR3.

In one or more embodiments of the present disclosure, the folding area FA may be bent around a folding axis extending in a direction parallel to a long side (or edge) of the electronic device ED, for example, in a direction parallel to the second direction DR2. The folding area FA may have a given curvature and a give radius of curvature, with the electronic device ED folded. The first non-folding area NFA1 and the second non-folding area NFA2 may face each other; in this case, the electronic device ED may be inner-folded such that the first display part DA1-F is not exposed to the outside.

In one or more embodiments of the present disclosure, the electronic device ED may be outer-folded such that the first display part DA1-F is exposed to the outside. In one or more embodiments of the present disclosure, the electronic device ED may support both the inner-folding and the outer-folding in the unfolded state, but the present disclosure is not limited thereto.

FIG. 3A illustrates that one folding area FA is defined (provided or included) in the electronic device ED, but the present disclosure is not limited thereto. For example, a plurality of folding axes and a plurality of folding areas corresponding thereto are defined in the electronic device ED. The electronic device ED may be in-folded or out-folded in a state where each of the plurality of folding areas is unfolded.

According to one or more embodiments of the present disclosure, at least one of the first display module DM1 and the second display module DM2 may sense an input by the pen PN even though a digitizer is not included therein. Accordingly, because the digitizer for sensing the pen PN is omitted, issues due to the addition of the digitizer, such as an increase in the thickness of the electronic device ED, an increase in the weight of the electronic device ED, and a decrease in flexibility of the electronic device ED, may not occur. Accordingly, as well as the first display module DM1, the second display module DM2 may also be designed to sense the pen PN.

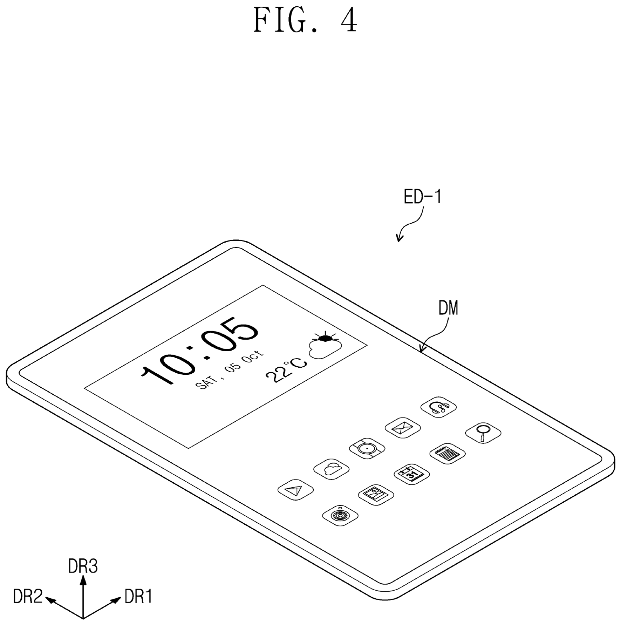

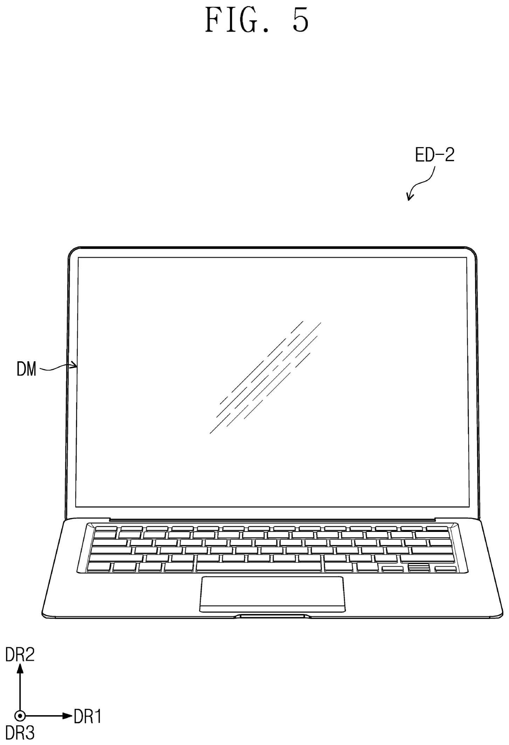

FIG. 4 is a perspective view of an electronic device according to one or more embodiments of the present disclosure, and FIG. 5 is a perspective view of an electronic device according to one or more embodiments of the present disclosure.

An example in which an electronic device ED-1 is a mobile phone or a tablet is illustrated in FIG. 4, and the electronic device ED-1 may include the display module DM. An example in which an electronic device ED-2 is a notebook is illustrated in FIG. 5, and the electronic device ED-2 may include the display module DM.

Referring to FIGS. 3A - 5, the display module DM may sense inputs applied from the outside. The external input may be an input of the user. The input of the user may include various types of external inputs such as a part of a user's body, the pen PN, a light, heat, and/or a pressure.

According to one or more embodiments of the present disclosure, even though the display module DM does not include the digitizer, the display module DM may sense an input by the pen PN. Accordingly, because the digitizer for sensing the pen PN is omitted, the thickness and weight of the electronic device ED-1 or ED-2 may not increase due to the addition of the digitizer.

The electronic device ED of a foldable type is illustrated in FIG. 3A as an example, and the electronic device ED-1 of a bar type is illustrated in FIG. 4 as an example. However, the present disclosure is not limited thereto. For example, the descriptions to be given below may be applied to various electronic devices such as a rollable electronic device, a slidable electronic device, and/or a stretchable electronic device.

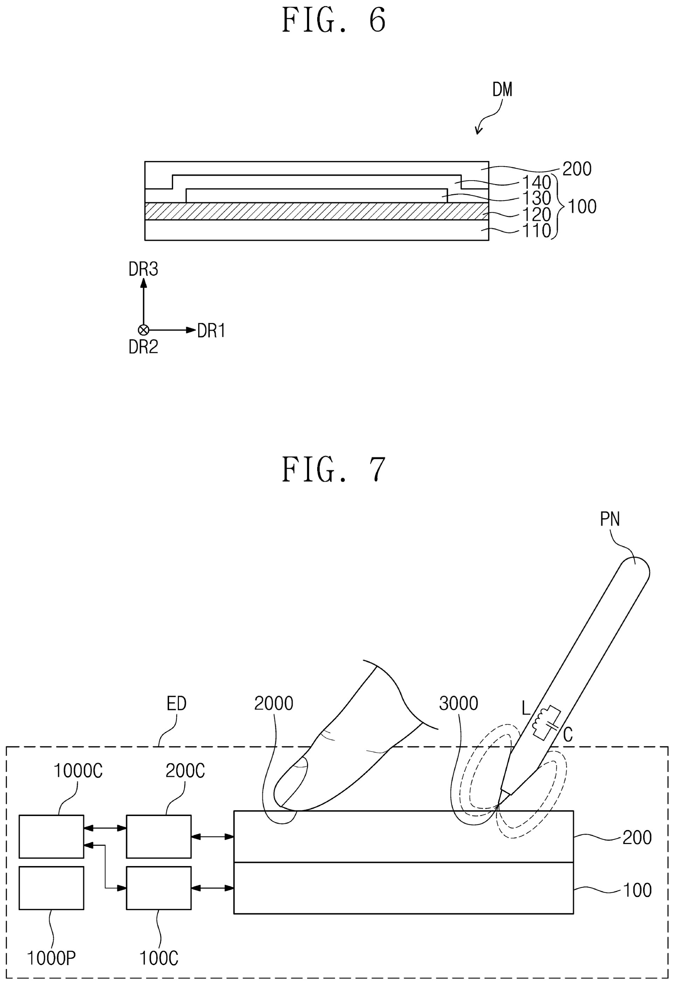

FIG. 6 is a cross-sectional view illustrating a display module according to one or more embodiments of the present disclosure.

Referring to FIG. 6, the display module DM may include a display layer 100 and a sensor layer 200.

The display layer 100 may be a component that substantially generates an image. The display layer 100 may be a light emitting display layer. For example, the display layer 100 may be an organic light emitting display layer, an inorganic light emitting display layer, an organic-inorganic light emitting display layer, a quantum dot display layer, a micro-LED display layer, and/or a nano-LED display layer. The display layer 100 may include a base layer 110, a circuit layer 120, a light emitting element layer 130, and an encapsulation layer 140.

The base layer 110 may be a member that provides a base surface on which the circuit layer 120 is disposed. The base layer 110 may include a multi-layer structure or a single-layer structure. The base layer 110 may be a glass substrate, a metal substrate, a silicon substrate, and/or a polymer substrate, but is not particularly limited thereto.

The circuit layer 120 may be disposed on the base layer 110. The circuit layer 120 may include an insulating layer, a semiconductor pattern, a conductive pattern, a signal line, etc. An insulating layer, a semiconductor layer, and a conductive layer may be formed on the base layer 110 by a coating and/or deposition process, and the insulating layer, the semiconductor layer, and the conductive layer may then be selectively patterned through a plurality of photolithography processes.

The light emitting element layer 130 may be disposed on the circuit layer 120. The light emitting element layer 130 may include a light emitting element. For example, the light emitting element layer 130 may include an organic light emitting material, an inorganic light emitting material, an organic-inorganic light emitting material, a quantum dot, a quantum rod, a micro-LED, or a nano-LED.

The encapsulation layer 140 may be disposed on the light emitting element layer 130. The encapsulation layer 140 may protect the light emitting element layer 130 from foreign substances such as moisture, oxygen, and/or dust particles.

The sensor layer 200 may be disposed on the display layer 100. The sensor layer 200 may sense an external input applied from the outside. The sensor layer 200 may be a sensor integrally formed to be continuous in the process of manufacturing the display layer 100, or the sensor layer 200 may be an external sensor attached to the display layer 100. The sensor layer 200 may be referred to as a "sensor", an "input sensing layer", an "input sensing panel", or an "electronic device for sensing input coordinates".

According to one or more embodiments of the present disclosure, the sensor layer 200 may sense both inputs from a passive-type input means such as the user's body and an input device for generating a magnetic field of a suitable resonant frequency (e.g., a predetermined resonant frequency). The input device may be referred to as a "pen", an "input pen", a "magnetic pen", a "stylus pen", or an "electromagnetic resonance pen".

FIG. 7 is a diagram for describing an operation of an electronic device according to one or more embodiments of the present disclosure.

Referring to FIG. 7, the electronic device ED may include the display layer 100, the sensor layer 200, a display driving unit 100C, a sensor driving unit 200C, a main driving unit 1000C, and a power supply circuit 1000P.

The sensor layer 200 may sense a first input 2000 and/or a second input 3000 applied from the outside. Each of the first input 2000 and the second input 3000 may be an input means capable of providing a change in the capacitance of the sensor layer 200 or an input means capable of causing an induced current in the sensor layer 200. For example, the first input 2000 may be a passive-type input means such as a user's body. The second input 3000 may be an input by the pen PN or an input by an RFIC tag. For example, the pen PN may be a passive-type pen or an active-type pen.

In one or more embodiments of the present disclosure, the pen PN may be a device that generates a magnetic field of a given resonant frequency. The pen PN may be configured to transmit an output signal that is based on an electromagnetic resonance manner. The pen PN may be referred to as an "input device", an "input pen", a "magnetic pen", a "stylus pen", or an "electromagnetic resonance pen".

The pen PN may include an RLC resonant circuit, and the RLC resonant circuit may include an inductor "L" and a capacitor "C". In one or more embodiments of the present disclosure, the RLC resonant circuit may be a variable resonant circuit whose resonant frequency is variable. In this case, the inductor "L" may be a variable inductor, and/or the capacitor "C" may be a variable capacitor. However, the present disclosure is not particularly limited thereto.

The inductor "L" generates a current by a magnetic field formed in the electronic device ED, for example, the sensor layer 200. However, the present disclosure is not particularly limited thereto. For example, when the pen PN operates in an active type, the pen PN may generate a current even though a magnetic field is not provided from the outside. The generated current is transferred to the capacitor "C". The capacitor "C" charges the current transferred from the inductor "L" and discharges the charged current to the inductor "L". Afterwards, the inductor "L" may form the magnetic field of the resonant frequency. The induced current may flow in the sensor layer 200 by the magnetic field formed by the pen PN, and the induced current may be transferred to the sensor driving unit 200C as a receive signal (or a sensing signal or a signal).

The main driving unit 1000C may control all operations of the electronic device ED. For example, the main driving unit 1000C may control operations of the display driving unit 100C and the sensor driving unit 200C. The main driving unit 1000C may include at least one microprocessor and may further include a graphics processor. The main driving unit 1000C may be referred to as an "application processor", a "central processing unit", or a "main processor".

The display driving unit 100C may drive the display layer 100. The display driving unit 100C may receive image data and a control signal from the main driving unit 1000C. The control signal may include various signals. For example, the control signal may include an input vertical synchronization signal, an input horizontal synchronization signal, a main clock signal, a data enable signal, etc.

The sensor driving unit 200C may drive the sensor layer 200. The sensor driving unit 200C may receive a control signal from the main driving unit 1000C. The control signal may include a clock signal of the sensor driving unit 200C. Also, the control signal may further include a mode determination signal for determining driving modes of the sensor driving unit 200C and the sensor layer 200.

The sensor driving unit 200C may be implemented as an integrated circuit (IC) and may be electrically connected to the sensor layer 200. For example, the sensor driving unit 200C may be directly mounted on a given area of a display panel; for the electrical connection with the sensor layer 200, the sensor driving unit 200C may be mounted on a separate printed circuit board in a chip-on-film (COF) manner.

The sensor driving unit 200C and the sensor layer 200 may selectively operate in a first mode or a second mode. For example, the first mode may be a mode of sensing a touch input, for example, the first input 2000. The second mode may be a mode of sensing an input by the pen PN, for example, the second input 3000. The first mode may be referred to as a "touch sensing mode", and the second mode may be referred to as a "pen sensing mode".

The transition between the first mode and the second mode may be made in various manners. For example, the sensor driving unit 200C and the sensor layer 200 may be driven in the first mode and the second mode in a time division manner and may sense the first input 2000 and the second input 3000. Alternatively, the transition between the first mode and the second mode may be caused due to the user's selection or the user's specific action (or input); alternatively, as a specific application is activated or deactivated, either the first mode or the second mode may be activated or deactivated, or one mode may transition to the other mode. Alternatively, while the sensor driving unit 200C and the sensor layer 200 alternately operate in the first mode and the second mode, the first mode may be maintained when the first input 2000 is sensed, or the second mode may be maintained when the second input 3000 is sensed.

The sensor driving unit 200C may calculate coordinate information of an input based on the signal received from the sensor layer 200 and may provide a coordinate signal including the coordinate information to the main driving unit 1000C. The main driving unit 1000C performs an operation corresponding to the user input based on the coordinate signal. For example, the main driving unit 1000C may drive the display driving unit 100C such that a new application image is displayed in the display layer 100.

The power supply circuit 1000P may include a power management integrated circuit (PMIC). The power supply circuit 1000P may generate a plurality of driving voltages for driving the display layer 100, the sensor layer 200, the display driving unit 100C, and the sensor driving unit 200C. For example, the plurality of driving voltages may include a high gate voltage, a low gate voltage, a first driving voltage (e.g., an ELVSS voltage), a second driving voltage (e.g., an ELVDD voltage), an initialization voltage, etc., but the present disclosure is not particularly limited thereto.

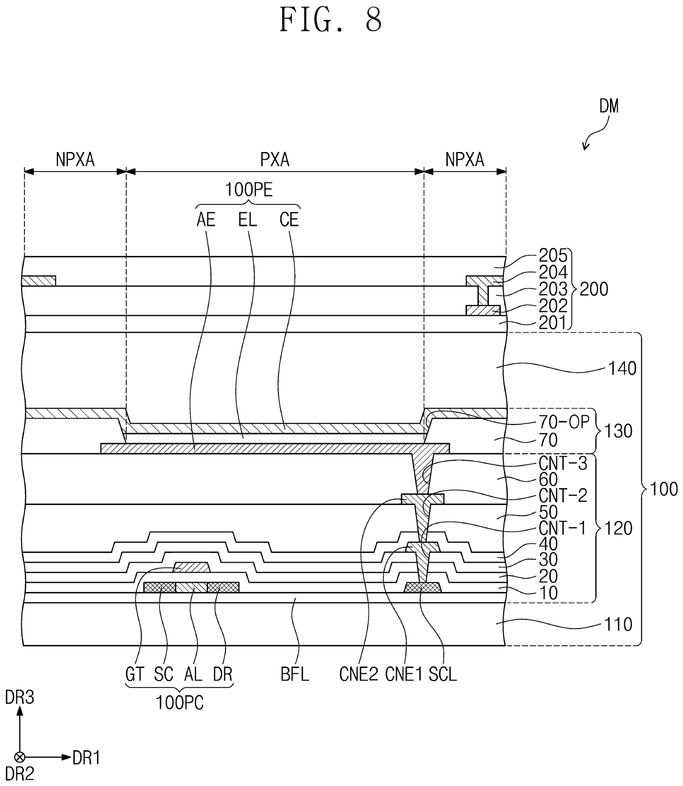

FIG. 8 is a cross-sectional view of a display module according to one or more embodiments of the present disclosure. In the description of FIG. 8, the components that are described with reference to FIG. 6 are marked by the same reference numerals/signs, and thus, additional description will be omitted to avoid redundancy.

Referring to FIG. 8, at least one buffer layer BFL is formed on an upper surface of the base layer 110. The buffer layer BFL may improve a bonding force between the base layer 110 and a semiconductor pattern. The buffer layer BFL may be formed in a multi-layer structure. Alternatively, the display layer 100 may further include a barrier layer. The buffer layer BFL may include at least one of silicon oxide, silicon nitride, or silicon oxynitride. For example, the buffer layer BFL may include a structure in which a silicon oxide layer and a silicon nitride layer are stacked alternately.

A semiconductor pattern (SC, AL, DR, SCL) may be disposed on the buffer layer BFL. The semiconductor pattern (SC, AL, DR, SCL) may include polysilicon. However, the present disclosure is not limited thereto. For example, the semiconductor pattern (SC, AL, DR, SCL) may include amorphous silicon, low-temperature polycrystalline silicon, or oxide semiconductor.

FIG. 8 shows only a portion of the semiconductor pattern (SC, AL, DR, SCL), and the semiconductor pattern (SC, AL, DR, SCL) may be further disposed in any other area. The semiconductor patterns (SC, AL, DR, SCL) may be arranged across pixels in compliance with a specific rule. The electrical property of the semiconductor pattern (SC, AL, DR, SCL) may be differently determined depending on whether it is doped. The semiconductor pattern (SC, AL, DR, SCL) may include a first area (SC, DR, SCL) whose conductivity is high and a second area AL whose conductivity is low. The first area (SC, DR, SCL) may be doped with an N-type dopant or a P-type dopant. A P-type transistor may include an area doped with the P-type dopant, and an N-type transistor may include an area doped with the N-type dopant. The second area AL may be an undoped area or an area doped with a concentration lower than a doping concentration in the first area SC, DR, or SCL.

The conductivity of the first area (SC, DR, SCL) may be greater than the conductivity of the second area AL and may substantially serve as an electrode or a signal line. The second area AL may substantially correspond to an active area (or channel) AL of a transistor 100PC. In other words, a portion AL of the semiconductor pattern (SC, AL, DR, SCL) may be the active area AL of the transistor 100PC, another portion (SC, DR) thereof may be a source area SC or a drain area DR of the transistor 100PC, and the other portion SCL thereof may be a connection electrode or a connection signal line SCL.

Each of pixels may be expressed by an equivalent circuit including a plurality of transistors, at least one capacitor, and at least one light emitting element, and the equivalent circuit of the pixel may be modified in various forms. One transistor 100PC and one light emitting element 100PE that are included in the pixel are illustrated in FIG. 8 as an example.

The source area SC, the active area AL, and the drain area DR of the transistor 100PC may be formed from the semiconductor pattern (SC, AL, DR, SCL). The source area SC and the drain area DR may extend in directions facing away from each other from the active area AL in a cross-sectional view. A portion of the connection signal line SCL formed from the semiconductor pattern (SC, AL, DR, SCL) is illustrated in FIG. 8. In one or more embodiments, the connection signal line SCL may be connected to the drain area DR of the transistor 100PC in a plan view.

A first insulating layer 10 may be disposed on the buffer layer BFL. The first insulating layer 10 may overlap a plurality of pixels in common and may cover the semiconductor pattern (SC, AL, DR, SCL). The first insulating layer 10 may be an inorganic layer and/or an organic layer and may have a single-layer or multi-layer structure. The first insulating layer 10 may include at least one of aluminum oxide, titanium oxide, silicon oxide, silicon nitride, silicon oxynitride, zirconium oxide, and/or a hafnium oxide. In one or more embodiments, the first insulating layer 10 may be a single silicon oxide layer. As well as the first insulating layer 10, an insulating layer of the circuit layer 120 to be described later may be an inorganic layer and/or an organic layer and may have a single-layer or multi-layer structure. The inorganic layer may include at least one of the above materials, but the present disclosure is not limited thereto.

A gate GT of the transistor 100PC is disposed on the first insulating layer 10. The gate GT may be a portion of a metal pattern. The gate GT overlaps the active area AL. The gate GT may function as a mask in the process of doping or reducing the semiconductor pattern (SC, AL, DR, SCL).

A second insulating layer 20 may be disposed on the first insulating layer 10 and may cover the gate GT. The second insulating layer 20 may overlap the pixels in common. The second insulating layer 20 may be an inorganic layer and/or an organic layer and may have a single-layer or multi-layer structure. The second insulating layer 20 may include at least one of silicon oxide, silicon nitride, or silicon oxy nitride. In one or more embodiments, the second insulating layer 20 may have a multi-layer structure including a silicon oxide layer and a silicon nitride layer.

A third insulating layer 30 may be disposed on the second insulating layer 20. The third insulating layer 30 may have a single-layer or multi-layer structure. In one or more embodiments, the third insulating layer 30 may have a multi-layer structure including a silicon oxide layer and a silicon nitride layer.

A first connection electrode CNE1 may be disposed on the third insulating layer 30. The first connection electrode CNE1 may be connected to the connection signal line SCL through a contact hole CNT-1 penetrating the first, second, and third insulating layers 10, 20, and 30.

A fourth insulating layer 40 may be disposed on the third insulating layer 30 and may cover the first connection electrode CNE1. The fourth insulating layer 40 may be a single silicon oxide layer. A fifth insulating layer 50 may be disposed on the fourth insulating layer 40. The fifth insulating layer 50 may be an organic layer.

A second connection electrode CNE2 may be disposed on the fifth insulating layer 50. The second connection electrode CNE2 may be connected to the first connection electrode CNE1 through a contact hole CNT-2 penetrating the fourth insulating layer 40 and the fifth insulating layer 50.

A sixth insulating layer 60 may be disposed on the fifth insulating layer 50 and may cover the second connection electrode CNE2. The sixth insulating layer 60 may be an organic layer.

The light emitting element layer 130 may be disposed on the circuit layer 120. The light emitting element layer 130 may include the light emitting element 100PE. For example, the light emitting element layer 130 may include an organic light emitting material, an inorganic light emitting material, an organic-inorganic light emitting material, a quantum dot, a quantum rod, a micro-LED, or a nano-LED. Below, an example in which the light emitting element 100PE is an organic light emitting element will be described, but the present disclosure is not particularly limited thereto.

The light emitting element 100PE may include a first electrode AE, an emissive layer EL, and a second electrode CE.

The first electrode AE may be disposed on the sixth insulating layer 60. The first electrode AE may be connected to the second connection electrode CNE2 through a contact hole CNT-3 penetrating the sixth insulating layer 60.

A pixel defining film 70 may be disposed on the sixth insulating layer 60 and may cover a portion of the first electrode AE. An opening 70-OP is defined in the pixel defining film 70. The opening 70-OP of the pixel defining film 70 exposes at least a portion of the first electrode AE.

The first display part DA1-F (refer of FIG. 3A) may include an emission area PXA and a non-emission area NPXA adjacent to the emission area PXA. The non-emission area NPXA may be around (e.g., may surround) the emission area PXA. In one or more embodiments, the emission area PXA is defined to correspond to a partial area of the first electrode AE exposed by the opening 70-OP.

The emissive layer EL may be disposed on the first electrode AE. The emissive layer EL may be disposed in the area defined by the opening 70-OP. FIG. 8 shows an example of the emissive layer EL disposed within the opening 70-OP, but the present disclosure is not particularly limited thereto. For example, the emissive layer EL may extend to cover a portion of a side surface of the pixel defining film 70 defining the opening 70-OP and an upper surface of the pixel defining film 70.

In one or more embodiments of the present disclosure, the emissive layer EL may be separately formed on each of pixels. When the emissive layer EL is independently formed for each pixel, each of the emissive layers EL may emit a light of at least one of a blue color, a red color, or a green color. However, the present disclosure is not limited thereto. For example, the emissive layer EL may be connected to the pixels in common. In this case, the emissive layer EL may provide a blue light or may provide a white light.

The second electrode CE may be disposed on the emissive layer EL. The second electrode CE may have an integrated shape and may be included in a plurality of pixels in common.

In one or more embodiments of the present disclosure, a hole control layer may be interposed between the first electrode AE and the emissive layer EL. The hole control layer may be disposed in common in the emission area PXA and the non-emission area NPXA. The hole control layer may include a hole transport layer and may further include a hole injection layer. An electron control layer may be disposed between the emissive layer EL and the second electrode CE. The electron control layer may include an electron transport layer and may further include an electron injection layer. The hole control layer and the electron control layer may be formed, in common, in a plurality of pixels by using an open mask or an inkjet process.

The encapsulation layer 140 may be disposed on the light emitting element layer 130. The encapsulation layer 140 may include an inorganic layer, an organic layer, and an inorganic layer sequentially stacked, and layers constituting the encapsulation layer 140 are not limited thereto. The inorganic layers may protect the light emitting element layer 130 from moisture and oxygen, and the organic layer may protect the light emitting element layer 130 from a foreign material such as dust particles. The inorganic layers may include a silicon nitride layer, a silicon oxynitride layer, a silicon oxide layer, a titanium oxide layer, an aluminum oxide layer, and/or the like. The organic layer may include an acrylic-based organic layer, but the present disclosure is not limited thereto.

The sensor layer 200 may include a base layer 201, a first conductive layer 202, an intermediate insulating layer 203, a second conductive layer 204, and a cover insulating layer 205.

The base layer 201 may be an inorganic layer including at least one of silicon nitride, silicon oxynitride, or silicon oxide. Alternatively, the base layer 201 may be an organic layer including epoxy resin, acrylate resin, or imide-based resin. The base layer 201 may have a single-layer structure or may have a structure in which multiple layers are stacked in the third direction DR3. In one or more embodiments of the present disclosure, the sensor layer 200 may not include the base layer 201.

Each of the first conductive layer 202 and the second conductive layer 204 may have a single-layer structure or may have a structure in which multiple layers are stacked in the third direction DR3

Each of the first conductive layer 202 and the second conductive layer 204 of a single-layer structure may include a metal layer or a transparent conductive layer. The metal layer may include molybdenum, silver, titanium, copper, aluminum, or an alloy thereof. The transparent conductive layer may include transparent conductive oxide such as indium tin oxide (ITO), indium zinc oxide (IZO), zinc oxide (ZnO), or indium zinc tin oxide (IZTO). In addition, the transparent conductive layer may include conductive polymer such as poly(3,4-ethylenedioxythiophene) (PEDOT), metal nanowire, graphene, etc.

Each of the first conductive layer 202 and the second conductive layer 204 of the multi-layer structure may include metal layers. The metal layers may have, for example, a three-layer structure of titanium/aluminum/titanium. The conductive layer of the multi-layer structure may include at least one metal layer and at least one transparent conductive layer.

In one or more embodiments of the present disclosure, the thickness of the first conductive layer 202 may be greater than or equal to the thickness of the second conductive layer 204. When the thickness of the first conductive layer 202 is greater than the thickness of the second conductive layer 204, the resistance of a component (e.g., an electrode, a sensing pattern, or a bridge pattern) included in the first conductive layer 202 may be reduced. Moreover, because the first conductive layer 202 is disposed under the second conductive layer 204, the probability that components included in the first conductive layer 202 are to be recognized by external light reflection may be lower than that of the second conductive layer 204, even though the thickness of the first conductive layer 202 is increased.

At least one of the intermediate insulating layer 203 and the cover insulating layer 205 may include an inorganic film. The inorganic layer may include at least one of aluminum oxide, titanium oxide, silicon oxide, silicon nitride, silicon oxynitride, zirconium oxide, and hafnium oxide.

At least one of the intermediate insulating layer 203 and the cover insulating layer 205 may include an inorganic film. The organic layer may include at least one of acrylic-based resin, methacrylic-based resin, polyisoprene, vinyl-based resin, epoxy-based resin, urethane-based resin, cellulose-based resin, siloxane-based resin, polyimide-based resin, polyamide-based resin, or perylene-based resin.

Previously, the description was given under the condition that the sensor layer 200 includes a total of two conductive layers (i.e., the first conductive layer 202 and the second conductive layer 204), but the present disclosure is not particularly limited thereto. For example, the sensor layer 200 may include three or more conductive layers.

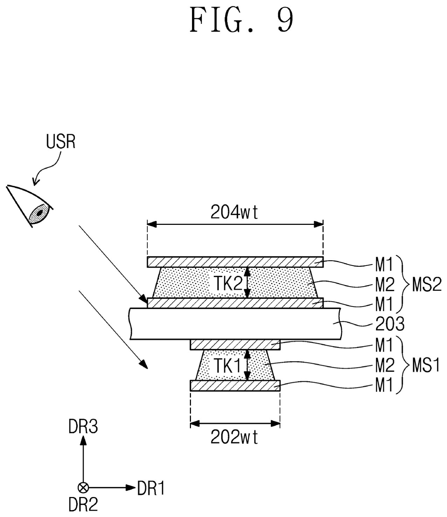

FIG. 9 is a cross-sectional view illustrating a partial configuration of a sensor layer according to one or more embodiments of the present disclosure.

Referring to FIGS. 8 and 9, a second width 204wt of a second mesh line MS2 included in the second conductive layer 204 may be greater than or equal to a first width 202wt of a first mesh line MS1 included in the first conductive layer 202. When a user USR watches the first mesh line MS1 and the second mesh line MS2 from a side, the first mesh line MS1 has a smaller width than the second mesh line MS2, and thus, the probability that the first mesh line MS1 is to be recognized by the user USR may be reduced.

Each of the first mesh line MS1 and the second mesh line MS2 may include first metal layers M1 and a second metal layer M2 interposed between the first metal layers M1. The first metal layers M1 may include titanium (Ti), and the second metal layer M2 may include aluminum (Al). However, this is only an example and is not particularly limited thereto.

In one or more embodiments of the present disclosure, a first thickness TK1 of the second metal layer M2 of the first mesh line MS1 and a second thickness TK2 of the second metal layer M2 of the second mesh line MS2 may be substantially the same as each other, but are not particularly limited thereto. For example, the first thickness TK1 may be thicker than the second thickness TK2. Alternatively, the second thickness TK2 may be thicker than the first thickness TK1. In one or more embodiments of the present disclosure, each of the first thickness TK1 and the second thickness TK2 may be 1000 angstrom (Å) or more, and for example, 6000 Å.

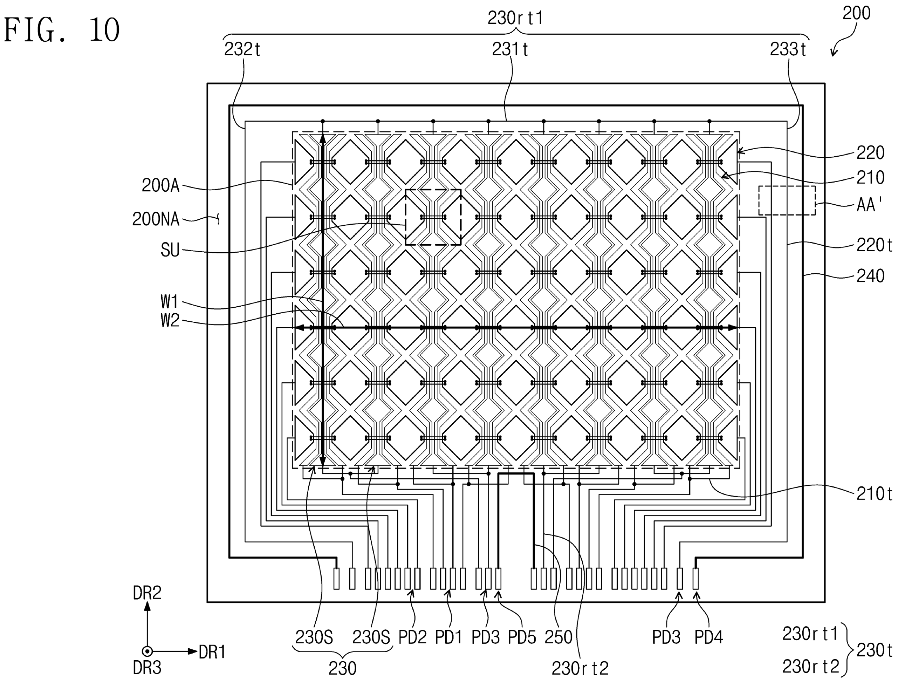

FIG. 10 is a plan view of a sensor layer according to one or more embodiments of the present disclosure.

Referring to FIG. 10, an active area 200A and a non-active area 200NA adjacent to the active area 200A may be defined in the sensor layer 200. The active area 200A may be an area which is activated by an electrical signal. For example, the active area 200A may be an area in which an input is sensed.

A plurality of sensing units SU disposed in the active area 200A may be defined in the sensor layer 200. The plurality of sensing units SU may be arranged along the first direction DR1 and the second direction DR2. The sensing units SU may, for example, have a grid layout as shown in Figure 10.

The sensor layer 200 may include a plurality of first electrodes 210, a plurality of second electrodes 220, a plurality of auxiliary electrodes 230, an outer electrode 240, and a lower-end electrode 250.

The plurality of first electrodes 210 may be disposed in the active area 200A. The plurality of first electrodes 210 may cross the plurality of second electrodes 220 so as to be insulated from each other. Each of the plurality of first electrodes 210 may extend along the second direction DR2. The plurality of first electrodes 210 may be arranged to be spaced (e.g., spaced apart) from each other in the first direction DR1.

The plurality of second electrodes 220 may be disposed in the active area 200A. Each of the plurality of second electrodes 220 may extend along the first direction DR1. The plurality of second electrodes 220 may be arranged to be spaced (e.g., spaced apart) from each other in the second direction DR2.

The area of each of the plurality of first electrodes 210 may be smaller than the area of each of the plurality of second electrodes 220.

In a plan view, a first length W1 of each of the plurality of first electrodes 210 in the second direction DR2 may be smaller than a second length W2 of each of the plurality of second electrodes 220 in the first direction DR1.

The plurality of auxiliary electrodes 230 may be disposed in the active area 200A. Each of the plurality of auxiliary electrodes 230 may extend along the second direction DR2. The plurality of auxiliary electrodes 230 may be arranged to be spaced (e.g., spaced apart) from each other in the first direction DR1. The plurality of auxiliary electrodes 230 may be insulated from the plurality of second electrodes 220.

In one or more embodiments of the present disclosure, each of the plurality of auxiliary electrodes 230 may include at least one pattern electrode 230S connected in parallel. The number of pattern electrodes 230S included in each of the plurality of auxiliary electrodes 230 may be variously changed and modified. For example, as the number of pattern electrodes 230S included in each of the plurality of auxiliary electrodes 230 increases, the resistance of each of the plurality of auxiliary electrodes 230 may decrease. This may mean that the efficiency of power is improved and the sensitivity of sensing is improved. In contrast, as the number of pattern electrodes 230S included in each of the plurality of auxiliary electrodes 230 decreases, a loop coil pattern which is formed by using the plurality of auxiliary electrodes 230 may be implemented in various shapes.

An example in which one auxiliary electrode 230 includes two pattern electrodes 230S is illustrated in FIG. 10, but the present disclosure is not particularly limited thereto. The pattern electrodes 230S may be arranged in a one-to-one correspondence with the plurality of first electrodes 210. Accordingly, one sensing unit SU may further include a portion of one pattern electrode 230S.

In one or more embodiments of the present disclosure, because one auxiliary electrode 230 includes two pattern electrodes 230S, one auxiliary electrode 230 may correspond to (or overlap) two first electrodes 210. Accordingly, the number of first electrodes 210 included in the sensor layer 200 may be more than the number of auxiliary electrodes 230. For example, the number of first electrodes 210 may be equal to the product of the number of auxiliary electrodes 230 included in the sensor layer 200 and the number of pattern electrodes 230S included in each of the auxiliary electrodes 230. In FIG. 10, the number of first electrodes 210 may be 8, the number of auxiliary electrodes 230 may be 4, and the number of pattern electrodes 230S included in each of the auxiliary electrodes 230 may be 2.

The outer electrode 240 may be disposed in the non-active area 200NA. The outer electrode 240 may be around (e.g., may partially or completely surround) a portion of the active area 200A.

The outer electrode 240 may include a first outer portion that is disposed at an upper end of the non-active area 200NA and extends in the first direction DR1. The first outer portion may be disposed adjacent to a second electrode disposed at an upper end of the active area 200A from among the plurality of second electrodes 220.

The resistance of the outer electrode 240 may be greater than the resistance of each of the plurality of second electrodes 220. An example in which the outer electrode 240 extends in the first direction DR1 and the second direction DR2 is illustrated in FIG. 10. However, the shape of the outer electrode 240 according to the present disclosure is not limited thereto. For example, the outer electrode 240 may be defined in various shapes, such as a zigzag shape and a sawtooth shape, to increase resistance.

The lower-end electrode 250 may be disposed in the non-active area 200NA. The lower-end electrode 250 may be disposed adjacent to the rest of the active area 200A.

The lower-end electrode 250 may include a first lower-end portion that is disposed at a lower end of the non-active area 200NA and extends in the first direction DR1. The first lower-end portion may be disposed adjacent to a second electrode disposed at a lower end of the active area 200A from among the plurality of second electrodes 220. The length of the first lower-end portion according to one or more embodiments of the present disclosure is not limited to that illustrated in FIG. 10. For example, the length of the first lower-end portion may correspond to the length of each of the plurality of second electrodes 220.

The resistance of the lower-end electrode 250 may be greater than the resistance of each of the plurality of second electrodes 220.

The sensor layer 200 may further include the following disposed in the non-active area 200NA: a plurality of first trace lines 210t, a plurality of first pads PD1 connected to the first trace lines 210t in a one-to-one correspondence, a plurality of second trace lines 220t, and a plurality of second pads PD2 connected to the second trace lines 220t in a one-to-one correspondence.

The first trace lines 210t may be electrically connected to the first electrodes 210 in a one-to-one correspondence.

The second trace lines 220t may be electrically connected to first ends and second ends of the second electrodes 220 in a one-to-one correspondence. That is, one second electrode 220 may be connected to two second trace lines 220t. A connection manner of the second trace lines 220t may be referred to as a "double routing manner".

The sensor layer 200 may further include a charging trace line 230t and a plurality of third pads PD3 disposed in the non-active area 200NA.

The charging trace line 230rt may include a (3-1)-th trace line 230rt1 and (3-2)-th trace lines 230rt2.

The plurality of third pads PD3 may be connected to a first end and a second end of the (3-1)-th trace line 230rt1 and the (3-2)-th trace lines 230rt2 in a one-to-one correspondence.

The (3-1)-th trace line 230rt1 may be electrically connected to the auxiliary electrodes 230. For example, the (3-1)-th trace line 230rt1 may be electrically connected to all the auxiliary electrodes 230. This may mean that the plurality of auxiliary electrodes 230 are electrically connected to each other. The (3-1)-th trace line 230rt1 may include a first line portion 231t extending along the first direction DR1 and electrically connected to the auxiliary electrodes 230, a second line portion 232t extending from a first end of the first line portion 231t along the second direction DR2, and a third line portion 233t extending from a second end of the first line portion 231t along the second direction DR2.

In one or more embodiments of the present disclosure, each of the resistance of the second line portion 232t and the resistance of the third line portion 233t may be substantially the same as the resistance of one of the auxiliary electrodes 230. Accordingly, the second line portion 232t and the third line portion 233t may serve as the auxiliary electrodes 230, and thus, the same effect as the auxiliary electrodes 230 are disposed in the non-active area 200NA may be obtained. For example, one of the second line portion 232t or the third line portion 233t and one of the auxiliary electrodes 230 may form a coil. Accordingly, a pen which is located in an area close to the non-active area 200NA may also be sufficiently charged by the loop including the second line portion 232t or the third line portion 233t.

In one or more embodiments of the present disclosure, to adjust the resistance of the second line portion 232t and the resistance of the third line portion 233t, the width of the second line portion 232t in the first direction DR1 and the width of the third line portion 233t in the first direction DR1 may be adjusted. However, this is provided only as an example. For example, the first to third line portions 231t, 232t, and 233t may have substantially the same width.

The (3-2)-th trace lines 230rt2 may be connected to the auxiliary electrodes 230 in a one-to-one correspondence. That is, the number of (3-2)-th trace lines 230rt2 may correspond to the number of auxiliary electrodes 230. Four (3-2)-th trace lines 230rt2 are illustrated in FIG. 10 as an example.

The sensor layer 200 may further include a plurality of fourth pads PD4 and a plurality of fifth pads PD5 disposed in the non-active area 200NA.

The plurality of fourth pads PD4 may be electrically connected to a first end and a second end of the outer electrode 240 in a one-to-one correspondence.

The plurality of fifth pads PD5 may be electrically connected to a first end and a second end of the lower-end electrode 250 in a one-to-one correspondence.

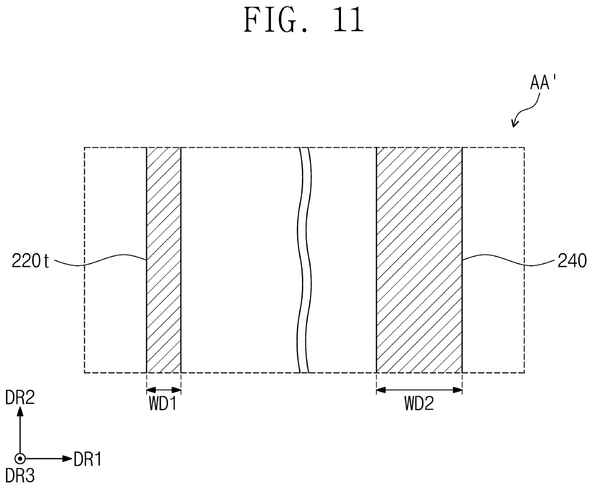

FIG. 11 is an enlarged plan view of an area AA' of FIG. 10 according to one or more embodiments of the present disclosure. One of the plurality of second trace lines 220t and a portion of the outer electrode 240 is illustrated in FIG. 11 as an example.

Referring to FIG. 11, each of the plurality of second trace lines 220t may have a solid structure. Each of the plurality of second trace lines 220t may have a first width WD1. Unlike the mesh structure where a separate mesh opening is defined, the solid structure may refer to an integrally formed structure. The solid structure may thus be a non-mesh structure.

The outer electrode 240 may have a solid structure. The outer electrode 240 may have a second width WD2.

The maximum value of the second width WD2 of the outer electrode 240 may be greater than the maximum value of the first width WD1 of each of the plurality of second trace lines 220t. The capacitance of the outer electrode 240 may be greater than the capacitance of each of the plurality of second trace lines 220t.

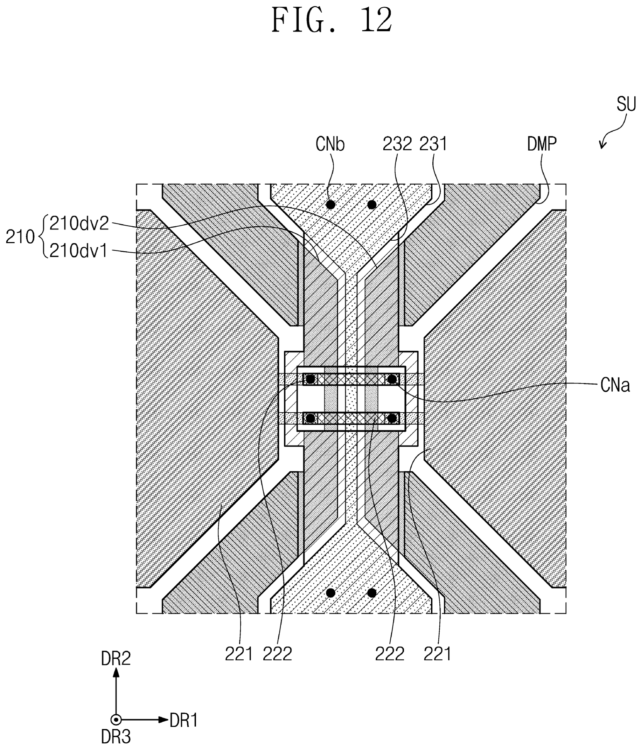

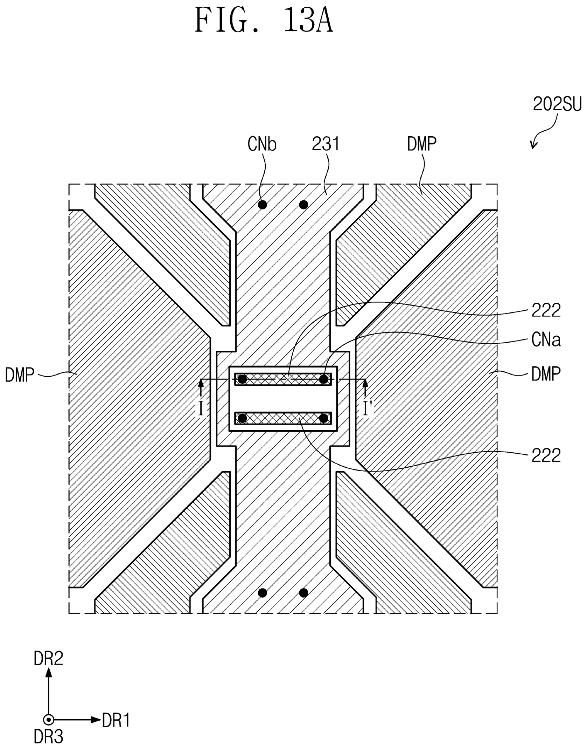

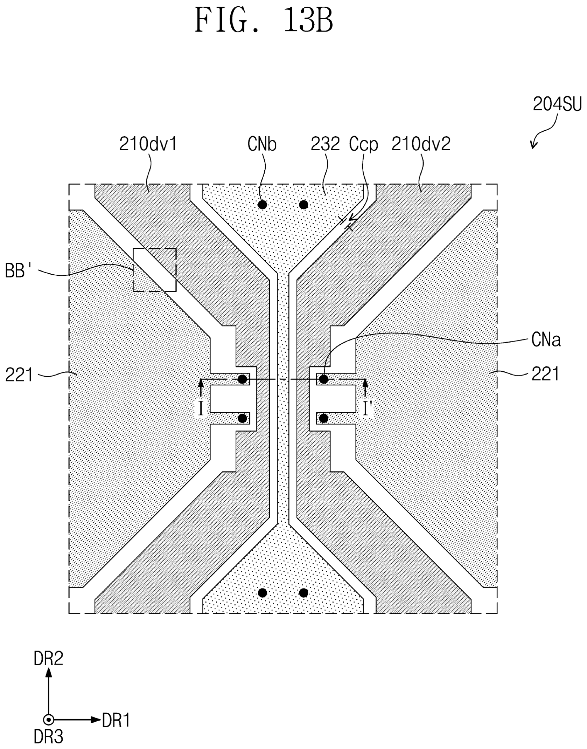

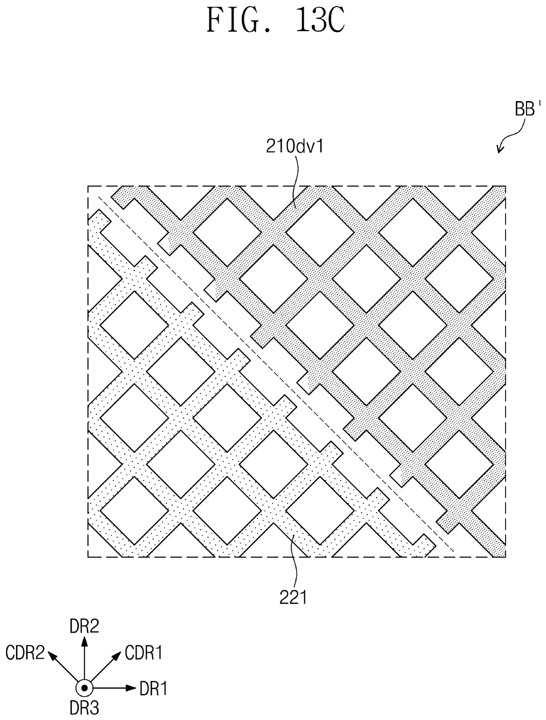

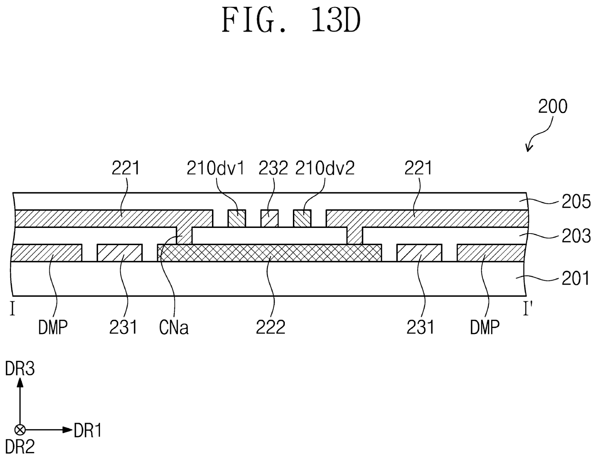

FIG. 12 is an enlarged plan view of one sensing unit according to one or more embodiments of the present disclosure, FIG. 13A is a plan view illustrating a first conductive layer of a sensing unit according to one or more embodiments of the present disclosure, FIG. 13B is a plan view illustrating a second conductive layer of a sensing unit according to one or more embodiments of the present disclosure, FIG. 13C is an enlarged plan view of an area BB' illustrated in FIG. 13B, and FIG. 13D is a cross-sectional view of a sensor layer taken along the line I- I' of each of FIGS. 13A and 13B.

Referring to FIGS. 11 - 13D, the sensing unit SU of the sensor layer 200 may refer to an area in which one first electrode 210 and one second electrode 220 cross each other. The sensing unit SU may include one first electrode 210 among the plurality of first electrodes 210 and one second electrode 220 among the plurality of second electrodes 220.

Each of the plurality of first electrodes 210 may include first division electrodes 210dv1 and 210dv2. The first division electrodes 210dv1 and 210dv2 may extend along the second direction DR2 and may be spaced from each other along the first direction DR1. The first division electrodes 210dv1 and 210dv2 may be symmetric with respect to a line which extends in the second direction DR2.

Each of the plurality of second electrodes 220 may include a sensing pattern 221 and a bridge pattern 222. The sensing pattern 221 and the bridge pattern 222 may be respectively disposed in different layers and may be electrically connected to each other through a first contact CNa. For example, the bridge pattern 222 may be included in a first conductive layer 202SU, and the sensing pattern 221 and the first division electrodes 210dv1 and 210dv2 may be included in a second conductive layer 204SU. The first conductive layer 202SU may be included in the first conductive layer 202 of FIG. 8, and the second conductive layer 204SU may be included in the second conductive layer 204 of FIG. 8.

Each of the plurality of auxiliary electrodes 230 may include a first auxiliary pattern 231 and a second auxiliary pattern 232. The first auxiliary pattern 231 and the second auxiliary pattern 232 may be disposed in different layers. The first auxiliary pattern 231 and the second auxiliary pattern 232 may be electrically connected to each other through a second contact CNb. The first auxiliary pattern 231 may be included in the first conductive layer 202SU, and the second auxiliary pattern 232 may be included in the second conductive layer 204SU.

In one or more embodiments of the present disclosure, a portion of the first auxiliary pattern 231 may overlap a portion of each of the first division electrodes 210dv1 and 210dv2. Accordingly, a coupling capacitance may be provided (or formed) between the first electrode 210 and the auxiliary electrode 230.

In one or more embodiments of the present disclosure, the first conductive layer 202SU may further include dummy patterns DMP. Each of the dummy patterns DMP may be electrically floated or may be electrically grounded. In one or more embodiments of the present disclosure, the dummy patterns DMP may be omitted.

Each of the plurality of first electrodes 210 may be around (e.g., may surround) the corresponding pattern electrode 230S. A coupling capacitor may be defined between one first electrode 210 and one auxiliary electrode 230. For example, a coupling capacitor Ccp may be defined between each of the first division electrodes 210dv1 and 210dv2 and the second auxiliary pattern 232. In this case, an induced current which is generated during sensing the pen may be transferred from the auxiliary electrode 230 to the first electrode 210 through the coupling capacitor Ccp. That is, the auxiliary electrode 230 may reinforce a signal (or current) to be transferred from the first electrode 210 to the sensor driving unit 200C. Accordingly, when a phase of a signal induced on the auxiliary electrode 230 and a phase of a signal induced on the first electrode 210 are matched with each other, the greatest effect may be obtained. Accordingly, the center of each of the plurality of first electrodes 210 in the second direction DR2 and the center of each of the plurality of auxiliary electrodes 230 in the second direction DR2 may overlap each other. Also, the center of each of the plurality of first electrodes 210 in the first direction DR1 and the center of each of the plurality of auxiliary electrodes 230 in the first direction DR1 may overlap each other.

Two first division electrodes 210dv1 and 210dv2 included in one first electrode 210 may be connected to one of the first trace lines 210t. Each of the first trace lines 210t may include a plurality of branch parts for the connection with the two first division electrodes 210dv1 and 210dv2. In one or more embodiments of the present disclosure, the two first division electrodes 210dv1 and 210dv2 may be connected to each other within the active area 200A.

Each of the plurality of first electrodes 210, the plurality of the second electrodes 220, and the plurality of auxiliary electrodes 230 may have a mesh structure. Each of the mesh structures may include a plurality of mesh lines. Each of the plurality of mesh lines may be of a shape extending in a given direction, and the plurality of mesh lines may be connected to each other. The shape may have various shapes such as a straight line, a line having protrusions, and an uneven line.

An opening in which the mesh structure is not disposed may be defined (provided or formed) in each of the plurality of first electrodes 210, the plurality of the second electrodes 220, and the plurality of auxiliary electrodes 230.

The sensing pattern 221 and the first division electrode 210dv1 are illustrated in FIG. 13C. A mesh structure that includes mesh lines extending in a first cross direction CDR1 intersecting the first direction DR1 and the second direction DR2, and mesh lines extending in a second cross direction CDR2 intersecting (e.g. perpendicular to) the first cross direction CDR1 is illustrated as an example. However, the directions in which the mesh lines constituting the mesh structure extend are not particularly limited to the example illustrated in FIG. 13C. For example, the mesh structure may include only mesh lines extending in the first direction DR1 and the second direction DR2 or may include mesh lines extending the first direction DR1, the second direction DR2, the first cross direction CDR1, and the second cross direction CDR2. That is, the mesh structure may be changed in various shapes.

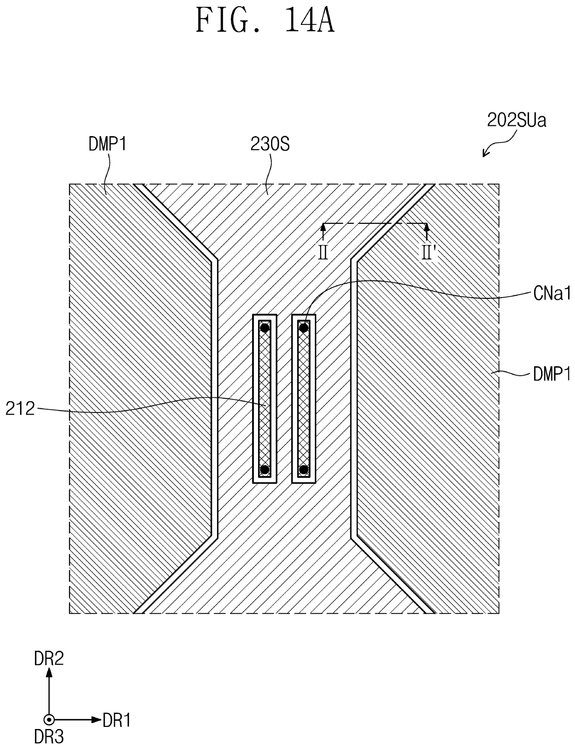

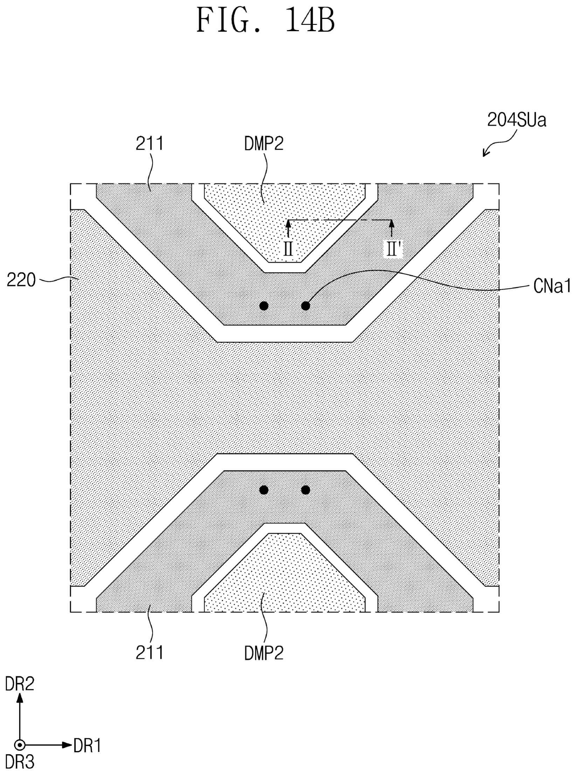

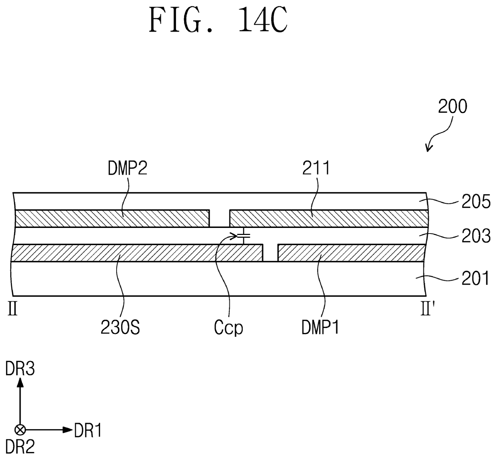

FIG. 14A is a plan view illustrating a first conductive layer of a sensing unit according to one or more embodiments of the present disclosure, FIG. 14B is a plan view illustrating a second conductive layer of a sensing unit according to one or more embodiments of the present disclosure, FIG. 14C is a cross-sectional view of a sensor layer according to one or more embodiments of the present disclosure, which is taken along the line II-II' illustrated in each of FIGS. 14A and 14B.

Referring to FIGS. 14A - 14C, each of the plurality of first electrodes 210 may include first sensing patterns 211 and a plurality of first bridge patterns 212. The first sensing patterns 211 may be spaced (e.g., spaced apart) from each other in the second direction DR2, and the first bridge patterns 212 may extend in the second direction DR2 and may be electrically connected to the first sensing patterns 211 through a first contact CNa1. An example in which two first sensing patterns 211 adjacent to each other are electrically connected to each other by two first bridge patterns 212 is illustrated in FIGS. 14A and 14B, but the present disclosure is not particularly limited thereto. For example, two first sensing patterns 211 adjacent to each other may be electrically connected to each other by one first bridge pattern 212 or may be electrically connected to each other by three or more first bridge patterns 212.

The first sensing patterns 211 adjacent in the second direction DR2 may be spaced (e.g., spaced apart) from each other, with the second electrode 220 interposed therebetween. In one or more embodiments of the present disclosure, the first sensing patterns 211 and the second electrode 220 may be included in a second conductive layer 204SUa, and first bridge patterns 212 may be included in a first conductive layer 202SUa. The first bridge patterns 212 may be insulated from the second electrode 220 overlapping the first bridge patterns 212 and may cross the second electrode 220 overlapping the first bridge patterns 212.

Each of the pattern electrodes 230S may extend in the second direction DR2. The pattern electrode 230S may be included in the first conductive layer 202SUa. One or more holes may be defined in each of the pattern electrode 230S. One first bridge pattern 212 may be disposed in one hole. Accordingly, the first bridge pattern 212 may be electrically insulated from the pattern electrode 230S.

In one or more embodiments of the present disclosure, the first conductive layer 202SUa may further include first dummy patterns DMP1, and the second conductive layer 204SUa may further include second dummy patterns DMP2. Each of the first dummy patterns DMP1 and the second dummy patterns DMP2 may be floated or may be electrically floated. Each of the first dummy patterns DMP1 and the second dummy patterns DMP2 may be divided into a plurality of conductive patterns. For example, one first dummy pattern DMP1 may include a plurality of floating dummy patterns separated from each other or electrically separated from each other.

The area of the pattern electrode 230S and the area of the first sensing pattern 211 may be adjusted. For example, a position of a boundary between the pattern electrode 230S and the first dummy patterns DMP1 and a position of a boundary between the first sensing pattern 211 and the second dummy patterns DMP2 may be adjusted. In this case, as the dimensions of an overlapping area where the pattern electrode 230S and the first sensing pattern 211 overlap each other are adjusted, a capacitance magnitude of the coupling capacitor Ccp between the pattern electrode 230S and the first sensing pattern 211 may be adjusted.

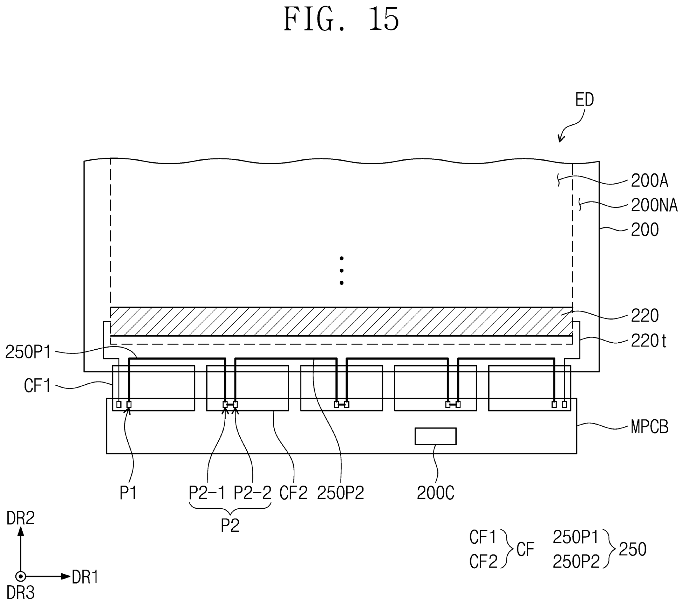

FIG. 15 partially illustrates an electronic device according to one or more embodiments of the present disclosure.

Referring to FIGS. 10 and 15, the electronic device ED may further include a main circuit board MPCB, plurality of connection films CF.

The plurality of connection films CF may include a first connection film CF1 and a second connection film CF2 arranged along the first direction DR1. The first connection film CF1 and the second connection film CF2 may be adjacent to each other.

The sensor driving unit 200C may be mounted on the main circuit board MPCB.

The first connection film CF1 may be electrically connected between the sensor layer 200 and the main circuit board MPCB. The first connection film CF1 may include a plurality of first connection pads P1 connected to the main circuit board MPCB.

The second connection film CF2 may be electrically connected between the sensor layer 200 and the main circuit board MPCB. The second connection film CF2 may include a plurality of second connection pads P2 connected to the main circuit board MPCB. The plurality of second connection pads P2 may include a first sub-pad P2-1 and a second sub-pad P2-2.

Each of the first connection film CF1 and the second connection film CF2 may transfer a signal from the main circuit board MPCB to the sensor layer 200. In one or more embodiments of the present disclosure, each of the first connection film CF1 and the second connection film CF2 may transfer a signal from the sensor driving unit 200C to the sensor layer 200.

Opposite ends of the second electrode 220 disposed at a lower end of the active area 200A from among the plurality of second electrodes 220 may be respectively connected to the plurality of second trace lines 220t.

The plurality of second trace lines 220t may be respectively connected to the plurality of second electrodes 220.

The first connection film CF1 may be connected to at least one of the plurality of second pads PD2.

One of the plurality of first connection pads P1 may be electrically connected to the second electrode 220.

The lower-end electrode 250 may be disposed in the non-active area 200NA. The lower-end electrode 250 may be adjacent to the second electrode 220. The lower-end electrode 250 may include a plurality of electrode portions 250P1 and 250P2 arranged along the first direction DR1. In this case, the lower-end electrode 250 may be referred to as a "separation-type lower-end electrode".

The plurality of electrode portions 250P1 and 250P2 may be electrically connected to each other. The plurality of electrode portions 250P1 and 250P2 may be respectively connected to the plurality of fifth pads PD5.

Each of the plurality of connection films CF may be connected to at least one of the plurality of fifth pads PD5.

The plurality of electrode portions 250P1 and 250P2 may include the first electrode portion 250P1 and the second electrode portion 250P2.

A first end of the first electrode portion 250P1 may be connected to the first connection film CF1. A second end of the first electrode portion 250P1 may be connected to the second connection film CF2.

The second end of the first electrode portion 250P1 may be connected to the first sub-pad P2-1.

The second electrode portion 250P2 may be disposed adjacent to the first electrode portion 250P1. A first end of the second electrode portion 250P2 may be connected to the second connection film CF2. A second end of the second electrode portion 250P2 may be connected to the second sub-pad P2-2.

The first sub-pad P2-1 and the second sub-pad P2-2 may be adjacent to each other. The first sub-pad P2-1 and the second sub-pad P2-2 may be connected. The first electrode portion 250P1 and the second electrode portion 250P2 may be connected to each other on the second connection film CF2.

The remaining electrode portions of the plurality of electrode portions 250P1 and 250P2 may be respectively connected on the plurality of connection films CF. The lower-end electrode 250 may extend in the first direction DR1 and may be adjacent to the second electrode 220 disposed at the lower end of the active area 200A from among the plurality of second electrodes 220.

According to the present disclosure, the first sub-pad P2-1 and the second sub-pad P2-2 may be in a short state. The lower-end electrode 250 may be disposed in the non-active area 200NA. Even though the pen PN (refer to FIG. 7) is disposed at the boundary of the active area 200A and the non-active area 200NA, it may be easy to receive a signal provided from the pen PN (refer to FIG. 7) by using the plurality of second electrodes 220 and the lower-end electrode 250. Accordingly, the electronic device ED with improved sensing reliability may be provided.

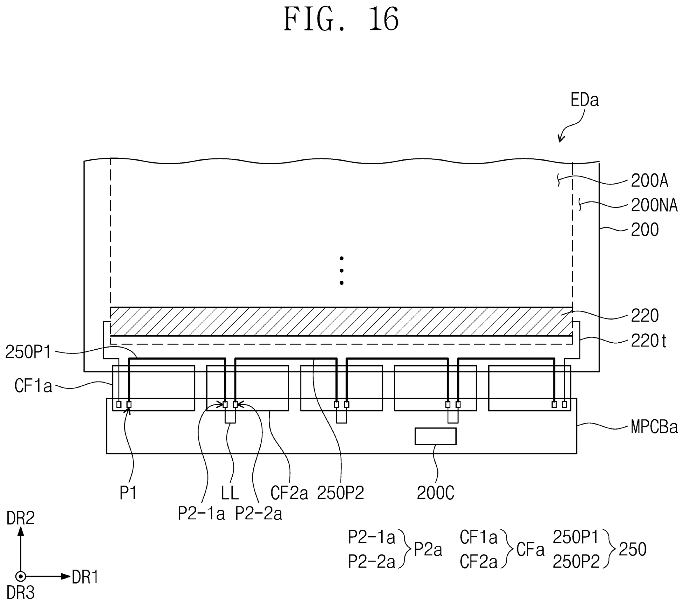

FIG. 16 partially illustrates an electronic device according to one or more embodiments of the present disclosure. In the description of FIG. 16, the components that are described with reference to FIG. 15 are marked by the same reference numerals/signs, and thus, additional description will be omitted to avoid redundancy.

Referring to FIGS. 10 and 16, an electronic device EDa may include a plurality of connection films CFa.

The plurality of connection films CFa may include a first connection film CF1a and a second connection film CF2a arranged along the first direction DR1. The first connection film CF1a and the second connection film CF2a may be adjacent to each other.

The second connection film CF2a may include a plurality of second connection pads P2a connected to the main circuit board MPCBa. The plurality of second connection pads P2a may include a first sub-pad P2-1a and a second sub-pad P2-2a.

Each of the plurality of connection films CFa may be connected to at least one of the plurality of fifth pads PD5.

A first end of the first electrode portion 250P1 may be connected to the first connection film CF1a. A second end of the first electrode portion 250P1 may be connected to the second connection film CF2a. The second end of the first electrode portion 250P1 may be connected to the first sub-pad P2-1a.

A first end of the second electrode portion 250P2 may be connected to the second connection film CF2a. A second end of the second electrode portion 250P2 may be connected to the second sub-pad P2-2a.

The main circuit board MPCBa may further include a connection line LL. The connection line LL may connect the first sub-pad P2-1a and the second sub-pad P2-2a. For example, the first sub-pad P2-1a and the second sub-pad P2-2a may be shortcircuited by the connection line LL.

The remaining electrode portions of the plurality of electrode portions 250P1 and 250P2 may be respectively connected on the main circuit board MPCBa through the connection lines LL. The lower-end electrode 250 may extend in the first direction DR1 and may be adjacent to the second electrode 220 disposed at the lower end of the active area 200A from among the plurality of second electrodes 220.

According to the present disclosure, even though the first sub-pad P2-1a and the second sub-pad P2-2a are not adjacent to each other, the first sub-pad P2-1a and the second sub-pad P2-2a may be electrically connected by the connection line LL. The lower-end electrode 250 may be disposed in the non-active area 200NA. Even though the pen PN (refer to FIG. 7) is disposed at the boundary of the active area 200A and the non-active area 200NA, it may be easy to receive a signal provided from the pen PN (refer to FIG. 7) by using the plurality of second electrodes 220 and the lower-end electrode 250. Accordingly, the electronic device EDa with improved sensing reliability may be provided.

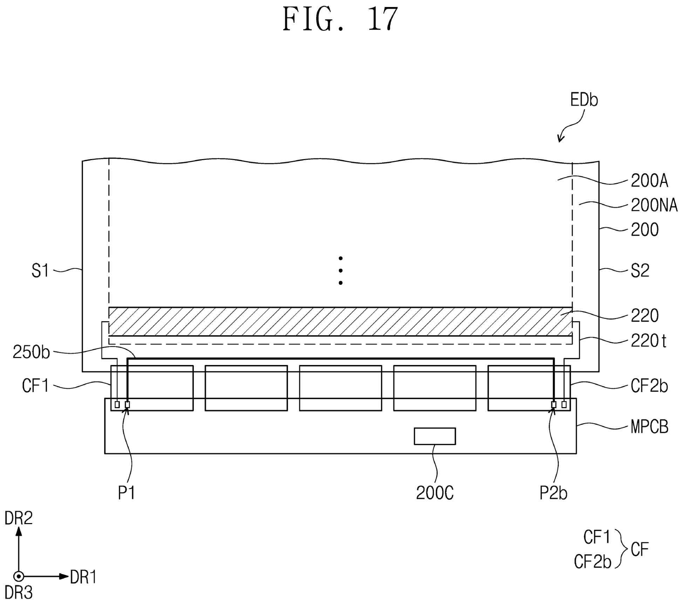

FIG. 17 partially illustrates an electronic device according to one or more embodiments of the present disclosure. In the description of FIG. 17, the components that are described with reference to FIG. 15 are marked by the same reference numerals/signs, and thus, additional description will be omitted to avoid redundancy.

Referring to FIGS. 10 and 17, an electronic device EDb may include the sensor layer 200 and the plurality of connection films CF. In the sensor layer 200, a first side surface S1 and a second side surface S2 spaced (e.g., spaced apart) from the first side surface S1 in the first direction DR1 may be defined.

The plurality of connection films CF may include the first connection film CF1 and a second connection film CF2b. The second connection film CF2b may be spaced (e.g., spaced apart) from the first connection film CF1 in the first direction DR1. The first connection film CF1 may be adjacent to the first side surface S1. The second connection film CF2b may be adjacent to the second side surface S2.

The second connection film CF2b may include a plurality of second connection pads P2b connected to the main circuit board MPCB.

A first end of a lower-end electrode 250b may be electrically connected to one of the plurality of first connection pads P1. A second end of the lower-end electrode 250b may be electrically connected to one of the plurality of second connection pads P2b.

The lower-end electrode 250b may extend in the first direction DR1. The lower-end electrode 250b may be referred to as an "integrated lower-end electrode". The lower-end electrode 250b may be adjacent to the second electrode 220 disposed at the lower end of the active area 200A from among the plurality of second electrodes 220.

According to one or more embodiments of the present disclosure, the lower-end electrode 250b may be disposed in the non-active area 200NA. Even though the pen PN (refer to FIG. 7) is disposed at the boundary of the active area 200A and the non-active area 200NA, it may be easy to receive a signal provided from the pen PN (refer to FIG. 7) by using the plurality of second electrodes 220 and the lower-end electrode 250b. Accordingly, the electronic device EDb with improved sensing reliability may be provided.

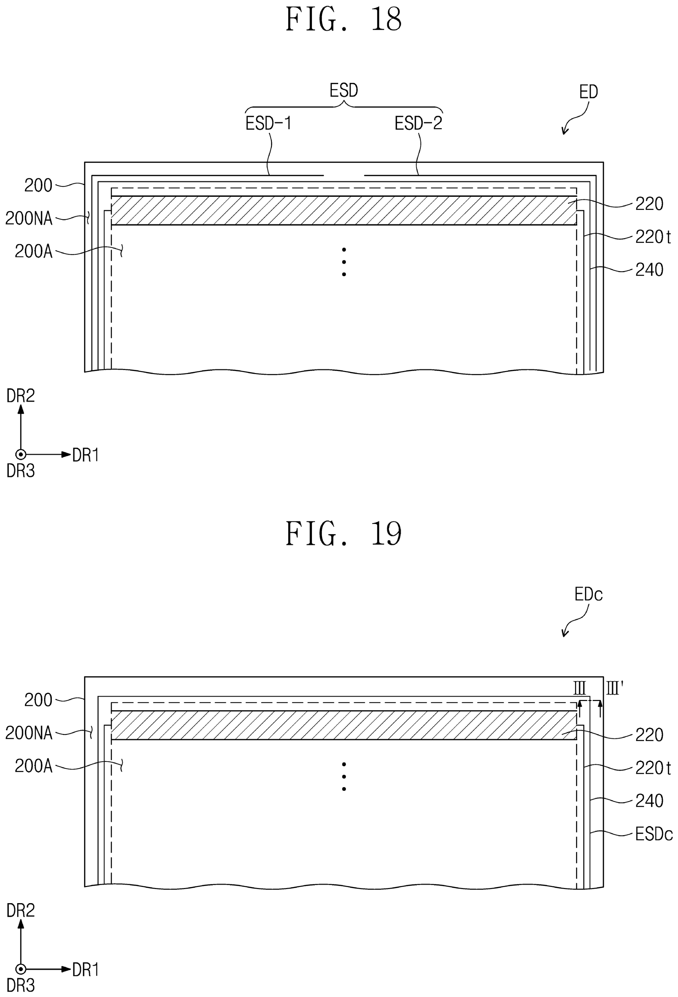

FIG. 18 partially illustrates an electronic device according to one or more embodiments of the present disclosure.

Referring to FIG. 18, the electronic device ED may include the sensor layer 200, the outer electrode 240, and a blocking electrode ESD.

The outer electrode 240 may be disposed in the non-active area 200NA. The outer electrode 240 may be adjacent to the second electrode 220 disposed at the upper end of the active area 200A from among the plurality of second electrodes 220.

The second electrode 220 may be connected to the plurality of second trace lines 220t.

The outer electrode 240 may be around (e.g., may surround) the second electrode 220 and the plurality of second trace lines 220t.

The blocking electrode ESD may be around (e.g., may surround) the outer electrode 240. A ground voltage may be provided to the blocking electrode ESD. The static electricity introduced from the outside may not be provided to the outer electrode 240 and the active area 200A by the blocking electrode ESD. The blocking electrode ESD may be spaced (e.g., spaced apart) from the outer electrode 240 and may prevent the static electricity from damaging the outer electrode 240.

The blocking electrode ESD may be provided in plurality. The plurality of blocking electrodes ESD may include a first blocking electrode ESD-1 and a second blocking electrode ESD-2. The first blocking electrode ESD-1 and the second blocking electrode ESD-2 may be spaced (e.g., spaced apart) from each other in the first direction DR1.

FIG. 19 partially illustrates an electronic device according to one or more embodiments of the present disclosure. In the description of FIG. 19, the components that are described with reference to FIG. 18 are marked by the same reference numerals/signs, and thus, additional description will be omitted to avoid redundancy.

Referring to FIG. 19, an electronic device EDc may include the sensor layer 200, the outer electrode 240, and a blocking electrode ESDc.

The blocking electrode ESDc may be around (e.g., may surround) a portion of the active area 200A. In a plan view, the blocking electrode ESDc may overlap the outer electrode 240. The ground voltage may be provided to the blocking electrode ESDc. The static electricity introduced from the outside may not be provided to the active area 200A by the blocking electrode ESDc.

In the electronic device EDc according to one or more embodiments of the present disclosure, the blocking electrode ESDc may be omitted. In this case, the outer electrode 240 may serve as the blocking electrode ESDc. The sensor driving unit 200C (refer to FIG. 7) may operate a first mode of sensing a touch or in a second mode of sensing an external input device, and the second mode may include a charging mode and a sensing mode. In the first mode and the charging mode, the ground voltage may be provided to the outer electrode 240. The static electricity introduced from the outside in the first mode or the charging mode may not be provided to the active area 200A by the outer electrode 240.

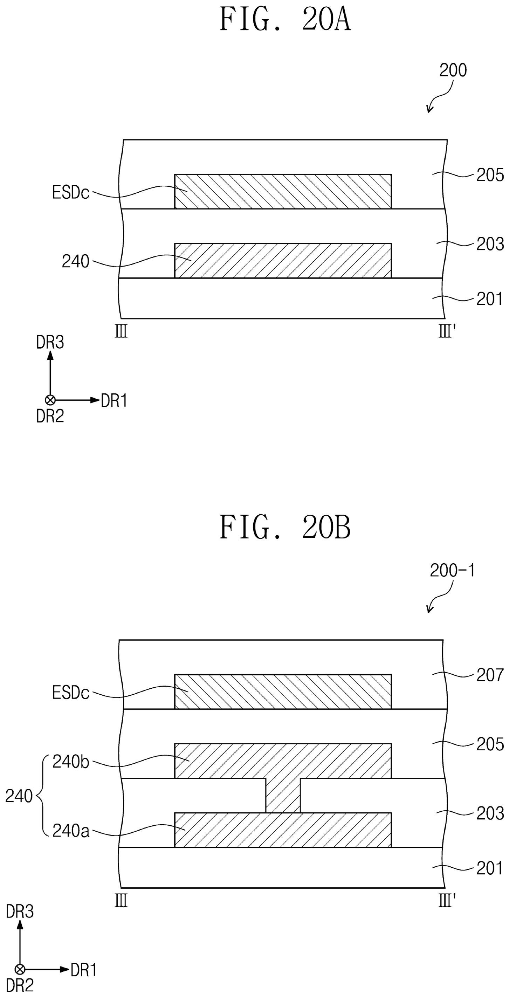

FIG. 20A is a cross-sectional view of a sensor layer taken along the line III-III' of FIG. 19 according to one or more embodiments of the present disclosure.

Referring to FIGS. 19 and 20A, the sensor layer 200 may include the base layer 201, the intermediate insulating layer 203, and the cover insulating layer 205.

The outer electrode 240 may be disposed on the base layer 201. The intermediate insulating layer 203 may cover the outer electrode 240.

The blocking electrode ESDc may be disposed on the intermediate insulating layer 203. The cover insulating layer 205 may cover the blocking electrode ESDc. In a plan view, the blocking electrode ESDc may overlap the outer electrode 240.

The blocking electrode ESDc may be disposed on the outer electrode 240. However, this is an example. The arrangement relationship of the blocking electrode ESDc and the outer electrode 240 according to one or more embodiments of the present disclosure is not limited thereto. For example, the blocking electrode ESDc may be disposed on the base layer 201, and the outer electrode 240 may be disposed on the intermediate insulating layer 203.

FIG. 20B is a cross-sectional view of a sensor layer taken along a line corresponding to the line III-III' of FIG. 19 according to one or more embodiments of the present disclosure. In the description of FIG. 20B, the components that are described with reference to FIG. 20A are marked by the same reference numerals/signs, and thus, additional description will be omitted to avoid redundancy.

Referring to FIG. 20B, a sensor layer 200-1 may further include an upper insulating layer 207 disposed on the cover insulating layer 205. That is, the sensor layer 200-1 may include three conductive layers. In one or more embodiments of the present disclosure, one of the outer electrode 240 or the blocking electrode ESDc may be formed of a plurality of conductive layers.

The outer electrode 240 may include a first electrode layer 240a and a second electrode layer 240b. The first electrode layer 240a and the second electrode layer 240b may be disposed on (e.g., at) different layers.

The first electrode layer 240a may be disposed on the base layer 201. The intermediate insulating layer 203 may cover the first electrode layer 240a.

The second electrode layer 240b may be disposed on the intermediate insulating layer 203. The cover insulating layer 205 may be around (e.g., may surround) the second electrode layer 240b.

The first electrode layer 240a and the second electrode layer 240b may be electrically connected through a contact hole penetrating the intermediate insulating layer 203. As the outer electrode 240 is implemented with a plurality of layers, the resistance of the outer electrode 240 may be reduced. However, this is an example. The configuration of the outer electrode 240 and the blocking electrode ESDc according to one or more embodiments of the present disclosure is not limited thereto. For example, the outer electrode 240 may be formed of a single layer, and the blocking electrode ESDc may be formed of a plurality of layers.

The blocking electrode ESDc may be disposed on the cover insulating layer 205. The upper insulating layer 207 may cover the blocking electrode ESDc.

The blocking electrode ESDc may be disposed on the outer electrode 240. However, this is an example. The arrangement relationship of the blocking electrode ESDc and the outer electrode 240 according to one or more embodiments of the present disclosure is not limited thereto. For example, the blocking electrode ESDc may be disposed on the base layer 201, the first electrode layer 240a may be disposed on the intermediate insulating layer 203, and the second electrode layer 240b may be disposed on the cover insulating layer 205.

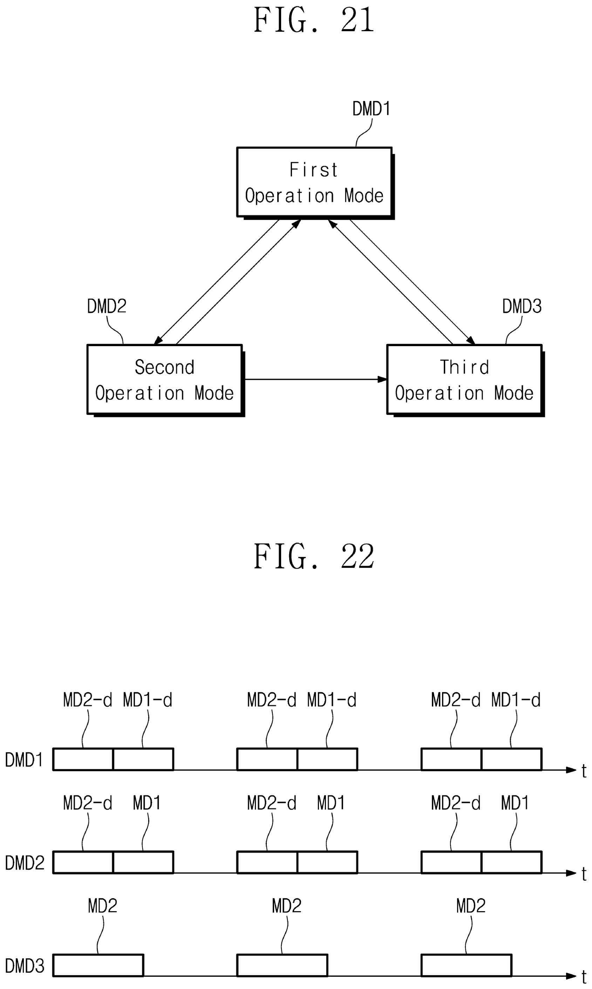

FIG. 21 illustrates an operation of a sensor driving unit according to one or more embodiments of the present disclosure.

Referring to FIGS. 7 and 21, the sensor driving unit 200C may be configured to be selectively driven in one of a first operation mode DMD1, a second operation mode DMD2, or a third operation mode DMD3.

The first operation mode DMD1 may be referred to as a "touch and pen standby mode", the second operation mode DMD2 may be referred to as a "touch enable and pen standby mode", and the third operation mode DMD3 may be referred to as a "pen enable mode". The first operation mode DMD1 may refer to a mode of waiting for the first input 2000 and the second input 3000. The second operation mode DMD2 may refer to a mode of sensing the first input 2000 and waiting for the second input 3000. The third operation mode DMD3 may refer to a mode of sensing the second input 3000.

In one or more embodiments of the present disclosure, the sensor driving unit 200C may be first driven in the first operation mode DMD1. When the first input 2000 is sensed in the first operation mode DMD1, the sensor driving unit 200C may switch (or change) to the second operation mode DMD2. Alternatively, when the second input 3000 is sensed in the first operation mode DMD1, the sensor driving unit 200C may switch (or change) to the third operation mode DMD3.

In one or more embodiments of the present disclosure, when the second input 3000 is sensed in the second operation mode DMD2, the sensor driving unit 200C may switch (or change) to the third operation mode DMD3. When the first input 2000 is released (or is not sensed) in the second operation mode DMD2, the sensor driving unit 200C may switch to the first operation mode DMD1. When the second input 3000 is released (or is not sensed) in the third operation mode DMD3, the sensor driving unit 200C may switch (or) to the first operation mode DMD1.

FIG. 22 illustrates an operation of a sensor driving unit according to one or more embodiments of the present disclosure.

Referring to FIGS. 7, 10, 21, and 22, operations in the first to third operation modes DMD1, DMD2, and DMD3 are illustrated as an example over time (t).

In the first operation mode DMD1, the sensor driving unit 200C may be repeatedly driven in a second mode MD2-d and a first mode MD1-d. During the second mode MD2-d, the sensor layer 200 may be scanned and driven to detect the second input 3000. During the first mode MD1-d, the sensor layer 200 may be scanned and driven to detect the first input 2000. An example in which the sensor driving unit 200C operates in the first mode MD1-d immediately after (or to be continuous to) the second mode MD2-d is illustrated in FIG. 22, but the order of the first mode MD1-d and the second mode MD2-d is not limited thereto.

In the second operation mode DMD2, the sensor driving unit 200C may be repeatedly driven in the second mode MD2-d and a first mode MD1. During the second mode MD2-d, the sensor layer 200 may be scanned and driven to detect the second input 3000. During the first mode MD1, the sensor layer 200 may be scanned and driven to detect coordinates of the first input 2000.

In the third operation mode DMD3, the sensor driving unit 200C may be driven in a second mode MD2. During the second mode MD2, the sensor layer 200 may be scanned and driven to detect coordinates of the second input 3000. In the third operation mode DMD3, the sensor driving unit 200C may not operate in the first mode MD1-d or MD1 until the second input 3000 is released (or is not sensed).

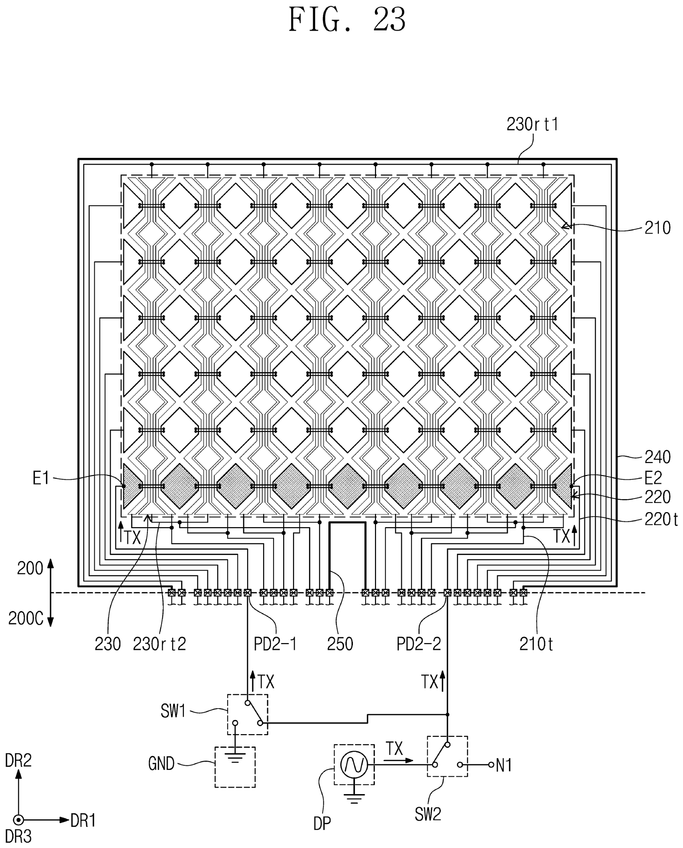

FIG. 23 illustrates a sensor layer and a sensor driving unit for describing a first mode according to one or more embodiments of the present disclosure. In the description of FIG. 23, the components that are described with reference to FIG. 10 are marked by the same reference numerals/signs, and thus, additional description will be omitted to avoid redundancy.

Referring to FIGS. 22 and 23, each of the first mode MD1-d and the first mode MD1 may refer to the mode of sensing a touch.

The first mode MD1-d and the first mode MD1 may include a mutual capacitance detection mode. However, this is provided as an example. The first mode MD1-d and the first mode MD1 according to one or more embodiments of the present disclosure may further include a magnetic capacitance detection mode.

The sensor driving unit 200C may include a driving unit DP, a ground GND, a plurality of pad parts, a first switch SW1, and a second switch SW2.

The driving unit DP may generate signals to be provided to the sensor layer 200. The driving unit DP may generate a driving signal (or an output signal) TX.

The plurality of pad parts may include the plurality of second pads PD2 (refer to FIG. 10). The plurality of second pads PD2 (refer to FIG. 10) may include a (2-1)-th pad PD2-1 and a (2-2)-th pad PD2-2.

The (2-1)-th pad PD2-1 may be electrically connected to a first end E1 of one of the plurality of second electrodes 220. The (2-1)-th pad PD2-1, the second trace line 220t, and the first end E1 may be connected to each other.

The (2-2)-th pad PD2-2 may be electrically connected to a second end E2 of the one second electrode 220 among the plurality of second electrodes 220. The (2-2)-th pad PD2-2, the second trace line 220t, and the second end E2 may be connected to each other.

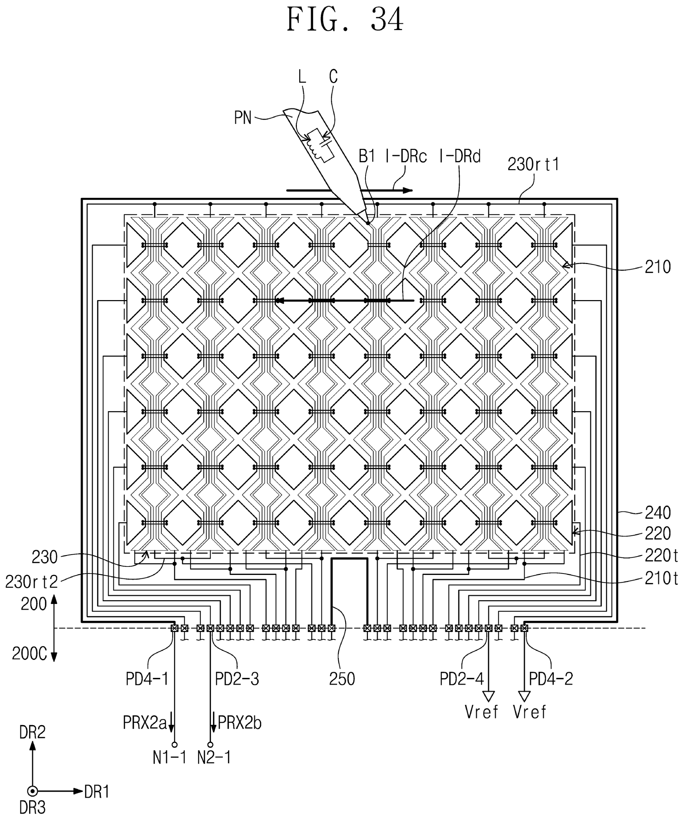

The first switch SW1 may be connected to the (2-1)-th pad PD2-1. The first switch SW1 may switch between the (2-2)-th pad PD2-2 and a voltage providing unit providing a voltage of a given voltage level. The voltage providing unit may be the ground GND. The ground voltage may be provided to the ground GND. However, this is an example, and a reference voltage Vref (refer to FIG. 34) may be provided to the voltage providing unit according to one or more embodiments of the present disclosure.

The second switch SW2 may be connected to the (2-2)-th pad PD2-2. The second switch SW2 may switch between the driving unit DP and a first node N1.

In the first mode MD1-d and the first mode MD1, the sensor driving unit 200C may electrically connect the first end E1 and the second end E2 of each of the plurality of second electrodes 220. The first switch SW1 may be connected to the (2-1)-th pad PD2-1 and the (2-2)-th pad PD2-2, and the second switch SW2 may be connected to the (2-2)-th pad PD2-2 and the driving unit DP.

In the sensor layer 200, a first end of the second trace line 220t connected to the first end E1 and a first end of the second trace line 220t connected to the second end E2 may not be connected to each other.

The first end of the second trace line 220t connected to the first end E1 and the first end of the second trace line 220t connected to the second end E2 may be connected to each other by the first switch SW1 and the second end E2 in the sensor driving unit 200C.

According to one or more embodiments of the present disclosure, each of the plurality of second electrodes 220 may be double routed within the sensor driving unit 200C by the first switch SW1 and the second switch SW2. The driving signal TX may be transferred to opposite ends of each of the plurality of second electrodes 220. The intensity of the driving signal TX may be prevented from being reduced. Accordingly, the reliability of sensing may be improved.

Also, according to one or more embodiments of the present disclosure, the sensor driving unit 200C may easily drive the sensor layer 200 by using the first switch SW1 and the second switch SW2, depending on a mode. Accordingly, the electronic device ED with improved reliability may be provided.

An example in which the driving signal TX is provided to one second electrode 220 is illustrated in FIG. 23. For the clear signal expression, in FIG. 23, only one second electrode 220 to which the driving signal TX is provided is hatched.

The sensor driving unit 200C may transmit the driving signal TX sequentially to the plurality of second electrodes 220.

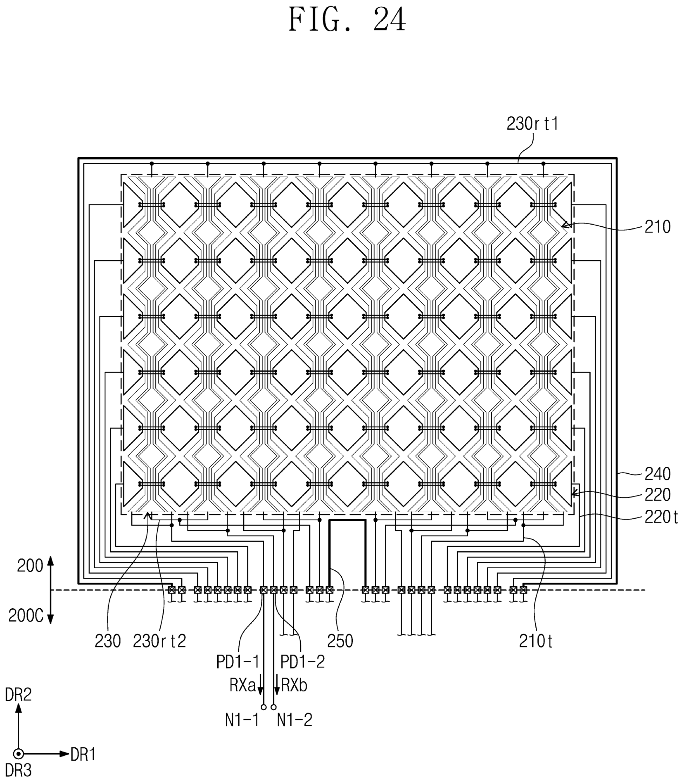

FIG. 24 illustrates a sensor layer and a sensor driving unit for describing a first mode according to one or more embodiments of the present disclosure. In the description of FIG. 24, the components that are described with reference to FIG. 10 are marked by the same reference numerals/signs, and thus, additional description will be omitted to avoid redundancy.

Referring to FIGS. 22 and 24, the plurality of pad parts may include the plurality of first pads PD1 (refer to FIG. 10). The plurality of first pads PD1 (refer to FIG. 10) may include a (1-1)-th pad PD1-1 and a (1-2)-th pad PD1-2.

The (1-1)-th pad PD1-1 may be connected to a (1-1)-th node N1-1. A first reception signal RXa may be provided from one of the plurality of first electrodes 210. The sensor driving unit 200C may receive the first reception signal RXa through the (1-1)-th node N1-1.

The (1-2)-th pad PD1-2 may be connected to a (1-2)-th node N1-2. A second reception signal RXb may be provided from another of the plurality of first electrodes 210. The sensor driving unit 200C may receive the second reception signal RXb through the (1-2)-th node N1-2.

The sensor driving unit 200C may detect coordinates of the first input 2000 (refer to FIG. 7) by using the first reception signal RXa and the second reception signal RXb. For example, the sensor driving unit 200C may sense a change in a mutual capacitance between the first electrodes 210 and the second electrodes 220 and may calculate coordinates of the touch based on a sensing result.

In the first mode MD1-d and the first mode MD1, the ground GND may be provided to pad parts connected to the plurality of first pads PD1 (refer to FIG. 7) from among the plurality of pad parts. The ground voltage may be provided to the plurality of auxiliary electrodes 230. Accordingly, a touch noise may be prevented from being introduced through the plurality of auxiliary electrodes 230.

In comparative examples which do not implement the present disclosure, for the sensing of the pen PN, a sensor layer may further include additional electrodes that extend in the same direction as the plurality of second electrodes 220 and each of which forms a coupling capacitor with each of the plurality of second electrodes 220. In this case, compared to the shape where the additional electrodes are omitted, the area of each of the plurality of second electrodes 220 may be reduced. Also, as parasitic capacitances are formed by the additional electrodes and any other electrodes adjacent thereto, the decrease in a touch bandwidth may be caused. In contrast, in examples of the present disclosure, the sensor driving unit 200C may include the first switch SW1 and the second switch SW2. Even though the additional electrodes are omitted, the driving operations of the first switch SW1 and the second switch SW2 may simplify and/or improve the sensing of the pen PN. The area of each of the plurality of second electrodes 220 may become relatively large, and thus, the resistance of each of the plurality of second electrodes 220 may be decreased. Accordingly, the load of each of the plurality of second electrodes 220 may be decreased. A touch bandwidth of a signal which the sensor driving unit 200C senses may be improved. Accordingly, the electronic device ED with improved touch reliability may be provided.

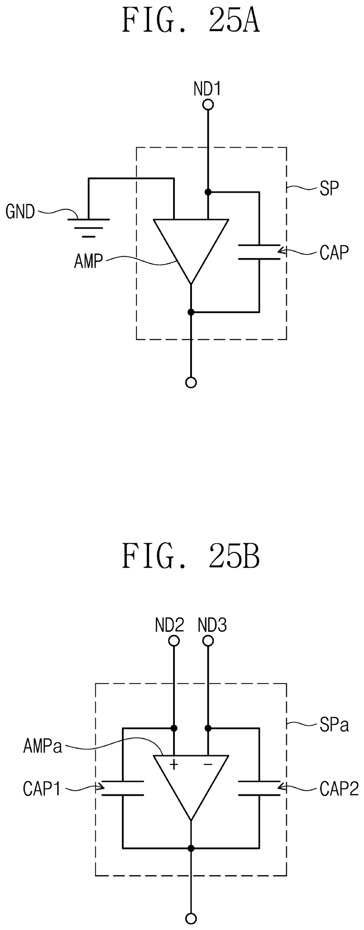

FIG. 25A illustrates a sensing unit according to one or more embodiments of the present disclosure.

Referring to FIGS. 23, 24, and 25A, the sensor driving unit 200C (refer to FIG. 7) may include a first sensing part SP. The first sensing part SP may be implemented with an analog front-end. The first sensing part SP may include an amplifier AMP and a capacitor CAP.

A first input terminal of the amplifier AMP may be connected to a first input node ND1. The first input node ND1 may be connected to one of the first node N1 (e.g., see FIG. 23), the (1-1)-th node N1-1, and the (1-2)-th node N1-2.

A second input terminal of the amplifier AMP may be connected to the voltage providing unit providing a voltage of a given voltage level. A voltage level which a voltage to be provided to the voltage providing unit has may correspond to the ground GND. However, this is provided as an example. A component which is connected to the second input terminal of the amplifier AMP according to one or more embodiments of the present disclosure is not limited thereto. For example, a given voltage may be provided to the second input terminal of the amplifier AMP.

A signal output through an output terminal of the amplifier AMP may be filtered. Afterwards, the filtered signal may be converted into a digital signal.

The capacitor CAP may be connected between the first input terminal and the output terminal, which the amplifier AMP includes.

The first sensing part SP may be configured to operate in a single-ended mode.

The first sensing part SP may be provided in plurality. The plurality of first sensing parts SP may be respectively connected to the (1-1)-th node N1-1 and the (1-2)-th node N1-2. The first sensing part SP connected to the (1-1)-th node N1-1 may receive the first reception signal RXa. The first sensing part SP connected to the (1-2)-th node N1-2 may receive the second reception signal RXb.

The plurality of sensing parts SP may receive the first reception signal RXa and the second reception signal RXb from the plurality of first electrodes 210, respectively. The sensor driving unit 200C (refer to FIG. 7) may detect coordinates of the first input 2000 (refer to FIG. 7) by using the first reception signal RXa and the second reception signal RXb. For example, the sensor driving unit 200C (refer to FIG. 7) may sense a change in a mutual capacitance between the first electrodes 210 and the second electrodes 220 and may calculate coordinates of the touch based on a sensing result.

FIG. 25B illustrates a sensing part according to one or more embodiments of the present disclosure.

Referring to FIGS. 23, 24, and 25B, the sensor driving unit 200C (refer to FIG. 7) may include a second sensing part SPa. The second sensing part SPa may include an amplifier AMPa and a plurality of capacitors CAP1 and CAP2. A first input terminal of the amplifier AMPa may be connected to a second input node ND2. A second input terminal of the amplifier AMP may be connected to a third input node ND3.

Each of the second input node ND2 and the third input node ND3 may be connected to one of the first node N1, the (1-1)-th node N1-1, and the (1-2)-th node N1-2.

A signal output through an output terminal of the amplifier AMPa may be filtered. Afterwards, the filtered signal may be converted into a digital signal.

The first capacitor CAP1 may be connected between the first input terminal and the output terminal. The second capacitor CAP2 may be connected between the second input terminal and the output terminal.

The second sensing part SPa may be configured to operate in a differential mode.

The second sensing part SPa may be connected to the (1-1)-th node N1-1 and the (1-2)-th node N1-2. The second sensing part SPa may receive the first reception signal RXa from the (1-1)-th node N1-1. The second sensing part SPa may receive the second reception signal RXb from the (1-2)-th node N1-2.

The second sensing part SPa may receive the reception signals RXa and RXb from one of the plurality of first electrodes 210 and another of the plurality of first electrodes 210 and may amplify a difference between the reception signals RXa and RXb. The sensor driving unit 200C may detect coordinates of the first input 2000 (refer to FIG. 7) by using the reception signals RXa and RXb. For example, the sensor driving unit 200C (refer to FIG. 7) may sense a change in a mutual capacitance between the first electrodes 210 and the second electrodes 220 and may calculate coordinates of the touch based on a sensing result.

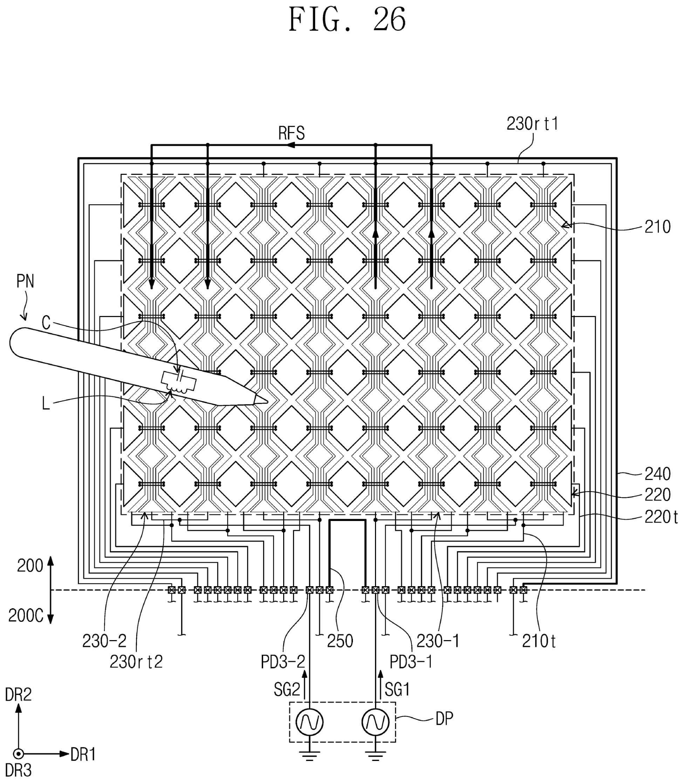

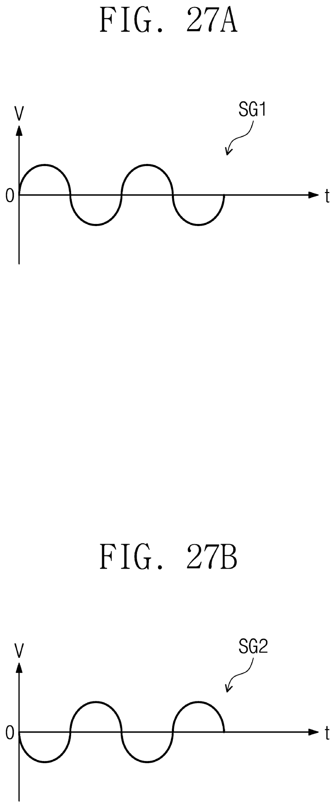

FIG. 26 illustrates a sensor layer and a sensor driving unit for describing a second mode according to one or more embodiments of the present disclosure, and FIGS. 27A and 27B illustrate graphs of waveforms of a first signal and a second signal according to one or more embodiments of the present disclosure.

Referring to FIGS. 7, 22, 26, 27A, and 27B, the second modes MD2 and MD2-d may include the charging mode and the sensing mode.

In the charging mode, the sensor driving unit 200C may transmit charging signals SG1 and SG2 to the sensor layer 200.

The sensor driving unit 200C may include the driving unit DP and a plurality of pad parts.

The driving unit DP may generate the charging signals SG1 and SG2. The charging signals SG1 and SG2 may include the first charging signal SG1 and the second charging signal SG2. The phase of the second charging signal SG2 may be opposite to the phase of the first charging signal SG1. For example, each of the first charging signal SG1 and the second charging signal SG2 may be a sinusoidal signal. However, this is provided as an example. Each of the first charging signal SG1 and the second charging signal SG2 may be a square wave signal.

The plurality of pad parts may include the plurality of third pads PD3 (refer to FIG. 10). The plurality of third pads PD3 (refer to FIG. 10) may include a (3-1)-th pad PD3-1 and a (3-2)-th pad PD3-2.

The first charging signal SG1 may be applied through the (3-1)-th pad PD3-1. The sensor driving unit 200C may transmit the first charging signal SG1 to one auxiliary electrode 230-1 among the plurality of auxiliary electrodes 230.

The second charging signal SG2 may be applied through the (3-2)-th pad PD3-2. The sensor driving unit 200C may transmit the second charging signal SG2 to another auxiliary electrode 230-2 among the plurality of auxiliary electrodes 230.

The one auxiliary electrode 230-1 and the another auxiliary electrode 230-2 may be spaced (e.g., spaced apart) from each other, with at least one of the others of the plurality of auxiliary electrodes 230 interposed therebetween. The sensor driving unit 200C may control the size of the charging loop by adjusting a distance (or space) between the one auxiliary electrode 230-1 and the another auxiliary electrode 230-2.

Because the first charging signal SG1 and the second charging signal SG2 have an opposite-phase relationship, the noise caused by the first charging signal SG1 in the display layer 100 may be canceled out with the noise caused by the second charging signal SG2. Accordingly, a flicker phenomenon may not occur in the display layer 100. This may mean that the display quality of the display layer 100 is improved.

A current RFS may have a current path from the (3-1)-th pad PD3-1 to the (3-2)-th pad PD3-2. Also, because the first charging signal SG1 and the second charging signal SG2 have an opposite-phase relationship, the direction of the current RFS may periodically change.

The current path may be in the shape of a coil. In this case, the current path may be referred to as a "single direct loop pathway". Accordingly, in the charging mode, the resonant circuit of the pen PN may be charged by the current path.

The charging mode may include a searching charging mode and a tracking charging mode.

In the searching charging mode, because there is a state where a position of the pen PN is not sensed, the first charging signal SG1 or the second charging signal SG2 may be provided sequentially to all the channels included in the sensor layer 200. For example, the first charging signal SG1 or the second charging signal SG2 may be scanned sequentially in the first direction DR1. That is, the entire active area 200A (refer to FIG. 7) of the sensor layer 200 may be scanned in the searching charging mode.

When the pen PN is sensed in the searching charging mode, the sensor layer 200 may be driven in a tracking charging driving mode. For example, in the tracking charging driving mode, the sensor driving unit 200C may output the first charging signal SG1 and the second charging signal SG2 to an area overlapping a point where the pen PN is sensed, not the entire sensor layer 200.

Accordingly, after the position of the pen PN is sensed, channels that correspond to a position of the pen PN in an immediately previous frame and are driven in the charging driving mode may be limited. Accordingly, channels that overlap an area where the pen PN is not located are not driven in the charging driving mode. This may mean that the efficiency of charging driving is improved.

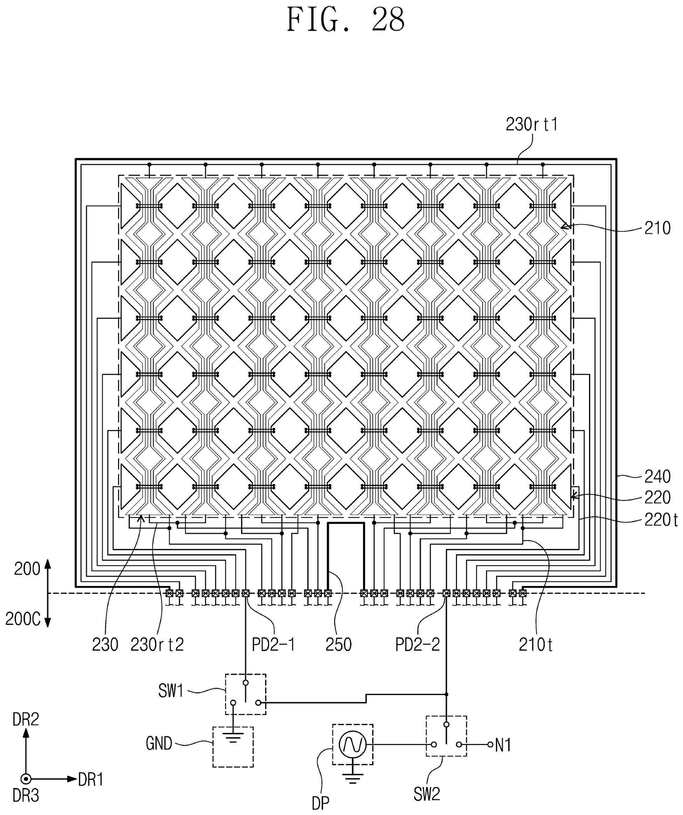

FIG. 28 illustrates a sensor layer and a sensor driving unit for describing a second mode according to one or more embodiments of the present disclosure.

Referring to FIGS. 7, 22, 27A-27B, and 28, in the charging mode, the first switch SW1 connected to a (2-1)-th pad PD2-1 of the sensor driving unit 200C may not be connected to the ground GND and a (2-2)-th pad PD2-2. The second switch SW2 connected to the (2-2)-th pad PD2-2 may not be connected to the driving unit DP and the first node N1.

The plurality of first electrodes 210 and the plurality of second electrodes 220 may be electrically floated. According to the above description, the current RFS (e.g., see FIG. 26) may not flow to the plurality of first electrodes 210 and the plurality of second electrodes 220.

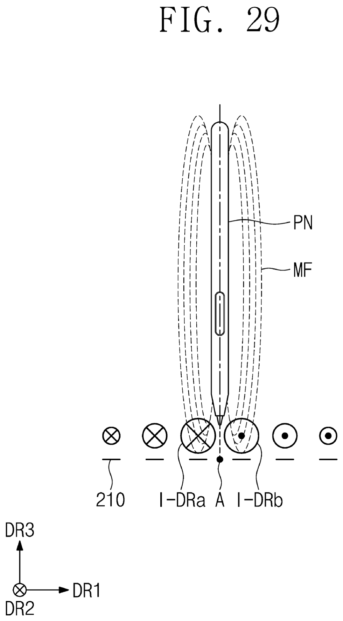

FIG. 29 is a diagram illustrating a magnitude and a direction of an induced current generated at a pen and first electrodes according to one or more embodiments of the present disclosure.

Referring to FIGS. 7, 22, and 29, in the sensing mode of the second mode MD2, a current may flow to a coil of an inductor while the RLC resonant circuit of the pen PN discharges the charged charges. A magnetic field MF may be formed by the current. The pen PN may emit the magnetic field MF of a resonant frequency.

A first induced current I-DRa and a second induced current I-DRb may be generated at the plurality of first electrodes 210 and the plurality of auxiliary electrodes 230 by the magnetic field MF.

The pen PN may be disposed on a first position "A". The first induced current I-DRa may flow in a direction entering the cross section with respect to the first position "A". The second induced current I-DRb may flow in a direction exiting the cross section with respect to the first position "A".

A magnitude of a circle expressing a direction of each of the first and second induced currents I-DRa and I-DRb may correspond to a magnitude of each of the first and second induced currents I-DRa and I-DRb. That is, as a distance from the pen PN increases, the magnitudes of the induced currents I-DRa and I-DRb may decrease.

When the pen PN is provided in a direction parallel to the third direction DR3 without being tilt, the magnitudes of the induced currents I-DRa and I-DRb may be bilaterally symmetrical with respect to the first position "A".

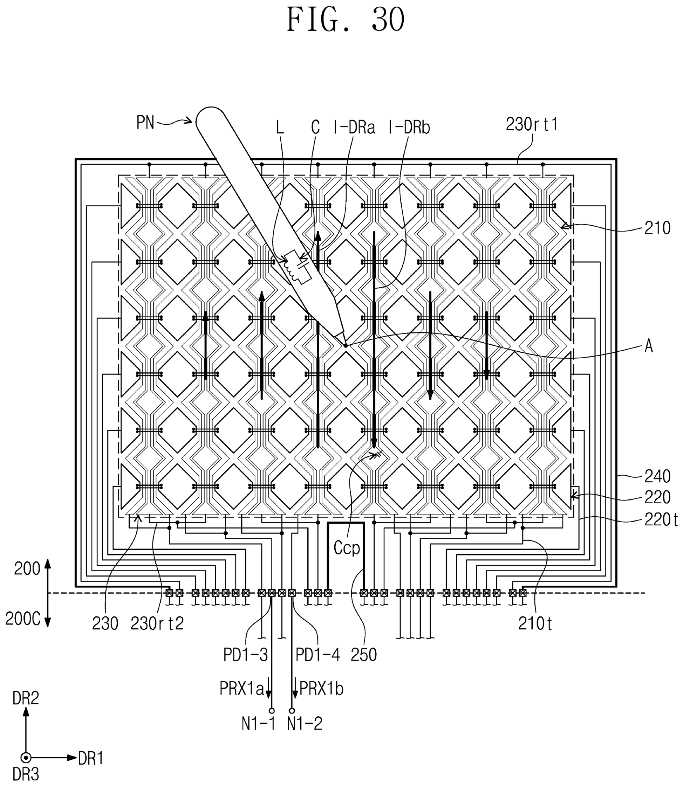

FIG. 30 illustrates a sensor layer and a sensor driving unit for describing a second mode according to one or more embodiments of the present disclosure.

Referring to FIGS. 23 and 30, in the sensing mode of the second mode MD2, the pen PN may be disposed at the first position "A". In a plan view, the first induced currents I-DRa may be formed at the first electrodes 210 and the auxiliary electrodes 230, which are located on the left side with respect to the pen PN, in the second direction DR2. The second induced current I-DRb may be formed at the first electrodes 210 and the auxiliary electrodes 230, which are located on the right side with respect to the pen PN, in the direction facing away from the second direction DR2.

The coupling capacitors Ccp may be respectively formed between the plurality of first electrodes 210 and the plurality of auxiliary electrodes 230. The induced currents I-DRa and I-DRb formed at the plurality of auxiliary electrodes 230 may be transferred to the plurality of first electrodes 210 through the coupling capacitors Ccp. The sensor driving unit 200C may receive first sensing signals PRX1a and PRX1b that are based on the induced currents I-DRa and I-DRb.

In the sensing mode, the sensor driving unit 200C may receive the first sensing signals PRX1a and PRX1b transferred by the capacitive coupling of the coupling capacitors Ccp between the plurality of first electrodes 210 and the plurality of auxiliary electrodes 230.

The plurality of first pads PD1 (refer to FIG. 10) may include a (1-3)-th pad PD1-3 and a (1-4)-th pad PD1-4. The (1-3)-th pad PD1-3 may be connected to the (1-1)-th node N1-1, and the (1-4)-th pad PD1-4 may be connected to the (1-2)-th node N1-2.

Each of the (1-1)-th node N1-1 and the (1-2)-th node N1-2 may be connected to the first sensing part SP (refer to FIG. 25A), or the (1-1)-th node N1-1 and the (1-2)-th node N1-2 may be connected to the second sensing part SPa (refer to FIG. 25B).

The (1-1)-th node N1-1 may receive a (1-1)-th sensing signal PRX1a, and the (1-2)-th node N1-2 may receive a (1-2)-th sensing signal PRX1b.

The sensor driving unit 200C may calculate a sensing current for each channel or for a differential channel by using the first sensing signals PRX1a and PRX1b. The sensing current may correspond to the first sensing signals PRX1a and PRX1b.

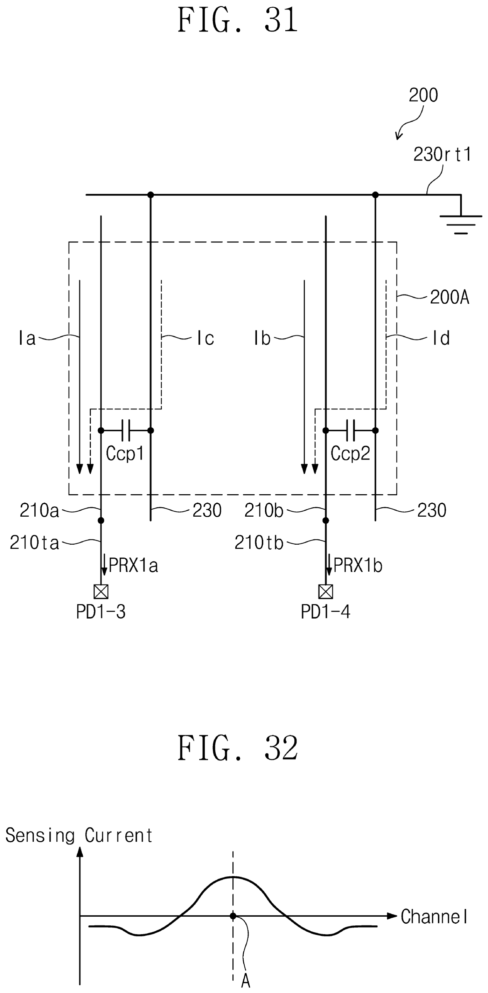

FIG. 31 is a diagram illustrating a sensor layer to describe a method of sensing an x-coordinate in a second mode according to an embodiment of the present disclosure.

Referring to FIGS. 29 - 31, a routing direction of first electrodes 210a and 210b may be different from a routing direction of the auxiliary electrodes 230. For example, the first electrode 210a and the first trace line 210ta may be connected to each other below the active area 200A, and the auxiliary electrode 230 and the (3-1)-th trace line 230rt1 may be connected to each other above the active area 200A.

The RLC resonant circuit of the pen PN may emit the magnetic field MF of the resonant frequency while discharging the charged charges. By the magnetic field MF provided by the pen PN, a first sub-current Ia may be generated at the first electrode 210a, and a second sub-current Ib may be generated at the first electrode 210b. Also, a third sub-current Ic and a fourth sub-current Id may be generated at the auxiliary electrodes 230.

A first coupling capacitance Ccp1 may be formed between the auxiliary electrode 230 and the first electrode 210a, and a second coupling capacitance Ccp2 may be formed between the auxiliary electrode 230 and the first electrode 210b.

The third sub-current Ic may be transferred to the first electrode 210a through the first coupling capacitance Ccp1, and the fourth sub-current Id may be transferred to the first electrode 210b through the second coupling capacitance Ccp2.

The first electrodes 210a and 210b may be respectively connected to a plurality of first trace lines 210ta and 210tb. The first electrode 210a, the first trace line 210ta, and the (1-3)-th pad PD1-3 may be electrically connected. The first electrode 210b, the first trace line 210tb, and the (1-4)-th pad PD1-4 may be electrically connected.

The sensor driving unit 200C may receive the (1-1)-th sensing signal PRX1a, which is based on the first sub-current Ia and the third sub-current Ic, from the first electrode 210a and may receive the (1-2)-th sensing signal PRX1b, which is based on the second sub-current Ib and the fourth sub-current Id, from the first electrode 210b. For example, the first induced current I-DRa may include the first sub-current Ia and the third sub-current Ic, and the second induced current I-DRb may include the second sub-current Ib and the fourth sub-current Id.

The sensor driving unit 200C may detect x-coordinate information of the pen PN based on the first sensing signals PRX1a and PRX1b.

The sensor driving unit 200C may receive the first sensing signals PRX1a and PRX1b from the first electrodes 210a and 210b, respectively. In this case, all first ends of the auxiliary electrodes 230 may be floated. Accordingly, the compensation for the sensing signal may be increased (e.g., maximized) by the coupling between the first electrodes 210a and 210b and the auxiliary electrodes 230.

Also, all second ends of the auxiliary electrodes 230 may be grounded or floated. Accordingly, the third sub-current Ic and the fourth sub-current Id may be sufficiently transferred to the first electrodes 210a and 210b by the coupling between the first electrodes 210a and 210b and the auxiliary electrodes 230.

In the sensing mode, the sensor driving unit 200C may receive the first sensing signals PRX1a and PRX1b transferred by the capacitive coupling of the coupling capacitors Ccp between the plurality of first electrodes 210 and the plurality of auxiliary electrodes 230. That is, the first sensing signals PRX1a and PRX1b may be sensed by the cap-assisted loop structure of the plurality of first electrodes 210 and the plurality of auxiliary electrodes 230.

FIG. 32 is a graph illustrating a current obtained from a differential pair of first channels according to one or more embodiments of the present disclosure.

Referring to FIGS. 7, 30, and 32, the plurality of first electrodes 210 may be referred to as a "plurality of first channels", respectively. Directions of the induced currents I-DRa and I-DRb sensed from first channels that are spaced (e.g., spaced apart) from each other with a pen-located portion interposed therebetween may be different. A direction of currents flowing to first channels located on the left side with respect to the position of the pen PN may be different from a direction of currents flowing to first channels located on the right side with respect to the position of the pen PN.

The sensor driving unit 200C may sense currents by performing differential sensing on channels adjacent to each other from among the plurality of first channels or channels spaced (e.g., spaced apart) from each other from among the plurality of first channels. For example, the sensing current may be obtained by performing differential sensing on an N-th first channel and an (N+2)-th first channel, but this is provided as an example. According to one or more embodiments of the present disclosure, the number of first electrodes targeted for differential sensing is not limited thereto. For example, an N-th first channel and an (N+3)-th first channel may be targeted for differential sensing. The sensor driving unit 200C may calculate the x-coordinate of the first position "A" of the pen PN based on a peak value of a sensing current graph for each differential channel.

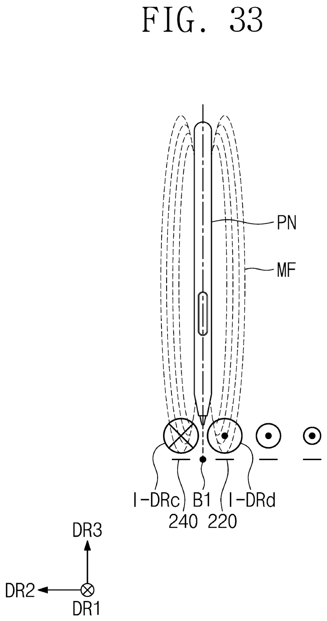

FIG. 33 is a diagram illustrating a magnitude and a direction of an induced current generated at a pen, second electrodes, and an outer electrode according to one or more embodiments of the present disclosure. In the description of FIG. 33, the components that are described with reference to FIG. 29 are marked by the same reference numerals/signs, and thus, additional description will be omitted to avoid redundancy.

Referring to FIGS. 7, 22, and 33, a third induced current I-DRc and a fourth induced current I-DRd may be generated at the plurality of second electrodes 220 and the outer electrode 240 by the magnetic field MF.

The pen PN may be disposed at a second position B1. The third induced current I-DRc may flow in a direction entering the cross section with respect to the second position B1. The fourth induced current I-DRd may flow in a direction exiting the cross section with respect to the second position B1.

A magnitude of a circle expressing a direction of each of the third and fourth induced currents I-DRc and I-DRd may correspond to a magnitude of each of the third and fourth induced currents I-DRc and I-DRd. That is, as a distance from the pen PN increases, the magnitude of the fourth induced current I-DRd may decrease.

FIG. 34 illustrates a sensor layer and a sensor driving unit for describing a second mode according to one or more embodiments of the present disclosure.

Referring to FIGS. 10 and 34, in the sensing mode of the second mode MD2, the pen PN may be disposed at the second position B1. The pen PN may be disposed adjacent to the boundary of the active area 200A and the non-active area 200NA, which is at an upper end of the active area 200A.

In a plan view, the third induced current I-DRc may be formed at the outer electrode 240, which are located on the upper side with respect to the pen PN, in the first direction DR1. The fourth induced current I-DRd may be formed on the second electrodes 220, which are located on the lower side with respect to the pen PN, in the direction facing away from the first direction DR1.

The sensor driving unit 200C may receive second sensing signals PRX2a and PRX2b, which are based on the induced currents I-DRc and I-DRd.

The plurality of fourth pads PD4 may include a (4-1)-th pad PD4-1 and a (4-2)-th pad PD4-2. The (4-1)-th pad PD4-1 may be connected to the (1-1)-th node N1-1, and the reference voltage Vref may be provided to the (4-2)-th pad PD4-2.

The plurality of second pads PD2 may include a (2-3)-th pad PD2-3 and a (2-4)-th pad PD2-4. The (2-3)-th pad PD2-3 may be connected to the (2-1)-th node N2-1, and the reference voltage Vref may be provided to the (2-4)-th pad PD2-4.

The reference voltage Vref may have a given voltage level. However, this is provided as an example. The ground voltage may be provided to the (4-2)-th pad PD4-2 and the (2-4)-th pad PD2-4 according to one or more embodiments of the present disclosure. For example, in the sensing mode, the first switch SW1 (refer to FIG. 28) may be connected to the ground GND, and the second switch SW2 (refer to FIG. 28) may be connected to the first node N1 (refer to FIG. 28).

Each of the (1-1)-th node N1-1 and the (2-1)-th node N2-1 may be connected to the first sensing part SP (refer to FIG. 25A), or the (1-1)-th node N1-1 and the (2-1)-th node N2-1 may be connected to the second sensing part SPa (refer to FIG. 25B).

The (1-1)-th node N1-1 may receive the (2-1)-th sensing signal PRX2a, and the (2-1)-th node N2-1 may receive the (2-2)-th sensing signal PRX2b.

The sensor driving unit 200C may calculate a sensing current for each channel or for a differential channel by using the second sensing signals PRX2a and PRX2b. The sensing current may correspond to the second sensing signals PRX2a and PRX2b.

Each of the plurality of second electrodes 220 may have a mesh structure. The plurality of second trace lines 220t respectively connected to the plurality of second electrodes 220 may have a solid structure. That is, the (2-1)-th sensing signal PRX2a may be transferred through a hybrid structure having the mesh structure and the solid structure.

The outer electrode 240 may have the solid structure. That is, the (2-2)-th sensing signal PRX2b may be transferred through the solid structure.

A first resistance of the outer electrode 240 may be greater than a second resistance of each of the plurality of second electrodes 220. According to the above description, the first resistance of the outer electrode 240 may be similar to a total resistance of each of the plurality of second electrodes 220 and the plurality of second trace lines 220t connected thereto. When the outer electrode 240 is provided in a plurality of layers, the first resistance of the outer electrode 240 may be controlled by the number of contacts between the first electrode layer 240a (refer to FIG. 20B) and the second electrode layer 240b (refer to FIG. 20B).

The maximum width WD2 (refer to FIG. 11) of the outer electrode 240 may be greater than the maximum width WD1 (refer to FIG. 11) of each of the plurality of second trace lines 220t. For example, the capacitance of the outer electrode 240 may be greater than the capacitance of each of the plurality of second trace lines 220t. The capacitance of the outer electrode 240 may be similar to a total capacitance of each of the plurality of second electrodes 220 and the plurality of second trace lines 220t connected thereto.

A first impedance acting on the (1-1)-th node N1-1 may be similar to a second impedance acting on the (2-1)-th node N2-1. For example, a difference rate between the first impedance and the second impedance may be 10% or less. The difference rate may refer to a method of dividing a difference between two values by an average value and multiplying a result of the division by 100 so as to be expressed as a percentage.

Unlike the present disclosure, when the difference rate between the first impedance acting on the (1-1)-th node N1-1 and the second impedance acting on the (2-1)-th node N2-1 exceeds 10%, it may be difficult to perform differential sensing on the (2-1)-th sensing signal PRX2a and the (2-2)-th sensing signal PRX2b by using the second sensing part SPa (refer to FIG. 25B). However, according to the present disclosure, impedance matching may be made between the (1-1)-th node N1-1 connected to the outer electrode 240 and the (2-1)-th node N2-1 connected to each of the plurality of second electrodes 220 and the plurality of second trace lines 220t connected thereto. It may be easy to perform differential sensing on the (2-1)-th sensing signal PRX2a and the (2-2)-th sensing signal PRX2b by using the second sensing part SPa (refer to FIG. 25B). Accordingly, the electronic device ED (refer to FIG. 7) with improved sensing reliability may be provided.

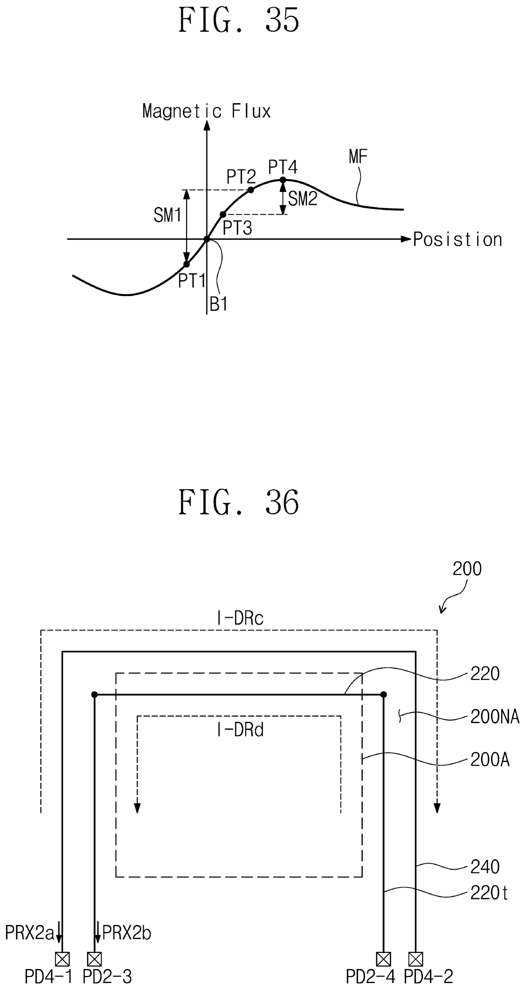

FIG. 35 is a graph illustrating a pen position-specific magnetic flux according to one or more embodiments of the present disclosure.

Referring to FIGS. 10, 34, and 35, the pen PN may emit the magnetic field MF of the resonant frequency.

The sensor layer 200 may sense the second sensing signals PRX2a and PRX2b through the outer electrode 240 and the plurality of second electrodes 220 by sensing the magnetic field MF for each position.

The sensor driving unit 200C may sense a current by performing differential sensing on channels adjacent to each other from among the outer electrode 240 and the plurality of second electrodes 220 or channels that are spaced (e.g., spaced apart) from each other from among the outer electrode 240 and the plurality of second electrodes 220. For example, the sensing current may be obtained by performing differential sensing on an N-th electrode and an (N+2)-th electrode.

When the pen PN is disposed at the upper end of the active area 200A to be adjacent to the boundary of the active area 200A and the non-active area 200NA, the N-th electrode may be the outer electrode 240. In this case, a position where the outer electrode 240 is disposed may be a first position PT1. The (N+2)-th electrode may be one (hereinafter referred to as a "second uppermost electrode") corresponding to the second uppermost electrode from the upper end of the active area 200A from among the plurality of second electrodes 220. In this case, a position where the second uppermost electrode is disposed may be a second position PT2.

The second sensing part SPa (refer to FIG. 25B) may perform differential sensing on the second sensing signals PRX2a and PRX2b. Because the induced current is proportional to the magnetic flux, a signal sensed by the second sensing signals PRX2a and PRX2b may have a first signal magnitude SM1.

Unlike the present disclosure, when the sensor layer 200 does not include the outer electrode 240, the N-th electrode may be one (hereinafter referred to as an "uppermost electrode") corresponding to the uppermost electrode from the upper end of the active area 200A from among the plurality of second electrodes 220. In this case, a position where the uppermost electrode is disposed may be a third position PT3. The (N+2)-th electrode may be one (hereinafter referred to as a "third uppermost electrode") corresponding to the third uppermost electrode from the upper end of the active area 200A from among the plurality of second electrodes 220. In this case, a position where the third uppermost electrode is disposed may be a fourth position PT4. A signal sensed by the uppermost electrode and the third uppermost electrode may have a second signal magnitude SM2. However, according to the present disclosure, the second sensing signals PRX2a and PRX2b of the outer electrode 240 and the uppermost electrode may have the first signal magnitude SM1. The first signal magnitude SM1 may be greater than the second signal magnitude SM2. Accordingly, the electronic device ED in which coordinate reliability at the boundary of the active area 200A and the non-active area 200NA is improved may be provided.

Also, according to the present disclosure, the sensor layer 200 may include the outer electrode 240 and the lower-end electrode 250, which are disposed in the non-active area 200NA. By the outer electrode 240, the sensor driving unit 200C may calculate coordinates up to the first position PT1 of the non-active area 200NA. A coordinate calculation range of the sensor driving unit 200C may be expanded to the active area 200A and a portion of the non-active area 200NA. The coordinate calculation range may be physically increased. Accordingly, the electronic device ED (refer to FIG. 7) with improved coordinate accuracy may be provided.

FIG. 36 is a diagram illustrating a sensor layer to describe a method of sensing an y-coordinate in a second mode according to one or more embodiments of the present disclosure.

Referring to FIGS. 34 - 36, the outer electrode 240 may be disposed in the non-active area 200NA. The outer electrode 240 may be around (e.g., may surround) a portion of the active area 200A. A first end of the outer electrode 240 may be connected to the (4-1)-th pad PD4-1, and a second end of the outer electrode 240 may be connected to the (4-2)-th pad PD4-2.

The second trace lines 220t may be electrically connected to first ends and second ends of the second electrodes 220 in a one-to-one correspondence. One of the second trace lines 220t may be connected to the (2-3)-th pad PD2-3, and another of the second trace lines 220t may be connected to the (2-4)-th pad PD2-4. The second electrode 220 may be connected in a double routing manner.

The RLC resonant circuit of the pen PN may emit the magnetic field MF of the resonant frequency while discharging the charged charges. The third induced current I-DRc may be generated at the outer electrode 240 by the magnetic field MF provided from the pen PN, and the fourth induced current I-DRd may be generated at the second electrode 220 and the plurality of second trace lines 220t.

The sensor driving unit 200C may receive the (2-1)-th sensing signal PRX2a, which is based on the third induced current I-DRc, from the outer electrode 240 and may receive the (2-2)-th sensing signal PRX2b, which is based on the fourth induced current I-DRd, from the second electrode 220 and the plurality of second trace lines 220t.

The sensor driving unit 200C may detect y-coordinate information of the pen PN based on the second sensing signals PRX2a and PRX2b.

In the sensing mode, the sensor driving unit 200C may directly receive a current of the second sensing signals PRX2a and PRX2b from the outer electrode 240, the lower-end electrode 250, and the plurality of second electrodes 220. That is, the second sensing signals PRX2a and PRX2b may be sensed by the direct loop structure of the outer electrode 240, the lower-end electrode 250, and the plurality of second electrodes 220.

X-axis and y-axis coordinates of the pen PN may be respectively sensed by utilizing different loop structures.

The sensor layer 200 according to one or more embodiments of the present disclosure may have both the cap-assisted loop structure and the direct loop structure. For example, the minor axis having the first length W1 (refer to FIG. 10) being relatively short may be formed by the plurality of first electrodes 210 and the plurality of auxiliary electrodes 230 in the cap-assisted loop structure, and the major axis having the second length W2 (refer to FIG. 10) being relatively long may be formed by the outer electrode 240, the lower-end electrode 250, and the plurality of second electrodes 220 in the direct loop structure.

The intensity of the second sensing signals PRX2a and PRX2b sensed from the direct loop structure may be different from the intensity of the first sensing signals PRX1a and PRX1b (refer to FIG. 30) sensed from the cap-assisted loop structure.

According to one or more embodiments of the present disclosure, in the direct loop structure, because the sensor driving unit 200C directly receives the second sensing signals PRX2a and PRX2b from each of the outer electrode 240, the lower-end electrode 250, and the plurality of second electrodes 220, the intensity of the second sensing signals PRX2a and PRX2b may be greater than the intensity of the first sensing signals PRX1a and PRX1b (refer to FIG. 30). Compared to the case where all sensing electrodes of a sensor layer are implemented in the cap-assisted loop structure, the pen sensing-bandwidth of the sensor layer 200 may be improved. Accordingly, the electronic device ED (refer to FIG. 7) with improved pen sensing reliability may be provided.

Unlike the present disclosure, assuming that both the minor axis and the major axis are formed in the direct loop structure, because the number of switches SW1 and SW2 (refer to FIG. 28) electrically connected to each of the plurality of second electrodes 220, which the sensor driving unit 200C includes, is increased as much as two times or more, the number of pads of a ball grid array (BGA) may be increased, thereby causing an increase in the size of an integrated circuit (IC) (refer to FIG. 28). However, according to one or more embodiments of the present disclosure, one of the minor axis and the major axis may be formed in the direct loop structure, and the other thereof may be formed in the cap-assisted loop structure. Accordingly, the increase in the IC size of the sensor driving unit 200C may be reduced or minimized. This may mean that the electronic device ED (refer to FIG. 7) with improved space efficiency is provided.

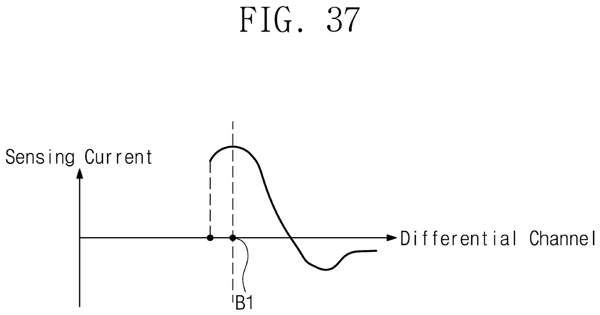

FIG. 37 is a graph illustrating a current obtained from a differential pair of second channels according to one or more embodiments of the present disclosure.

Referring to FIGS. 7, 34, and 37, the outer electrode 240, the lower-end electrode 250, and the plurality of second electrodes 220 may be referred to as a "plurality of second channels", respectively. Directions of the induced currents I-DRc and I-DRd sensed from second channels that are spaced (e.g., spaced apart) from each other with a pen-located portion interposed therebetween may be different. A direction of currents flowing to second channels located on the upper side with respect to the position of the pen PN may be different from a direction of currents flowing to second channels located on the lower side with respect to the position of the pen PN.

The sensor driving unit 200C may sense currents by performing differential sensing on channels adjacent to each other from among the plurality of second channels or channels spaced apart from each other from among the plurality of second channels. For example, the sensing current may be obtained by performing differential sensing on an N-th second channel and an (N+2)-th second channel, but this is provided as an example. According to an embodiment of the present disclosure, the number of second electrodes targeted for differential sensing is not limited thereto. For example, an N-th second channel and an (N+3)-th second channel may be targeted for differential sensing. The sensor driving unit 200C may calculate the y-coordinate of the second position B1 of the pen PN based on a peak value of a sensing current graph for each differential channel.

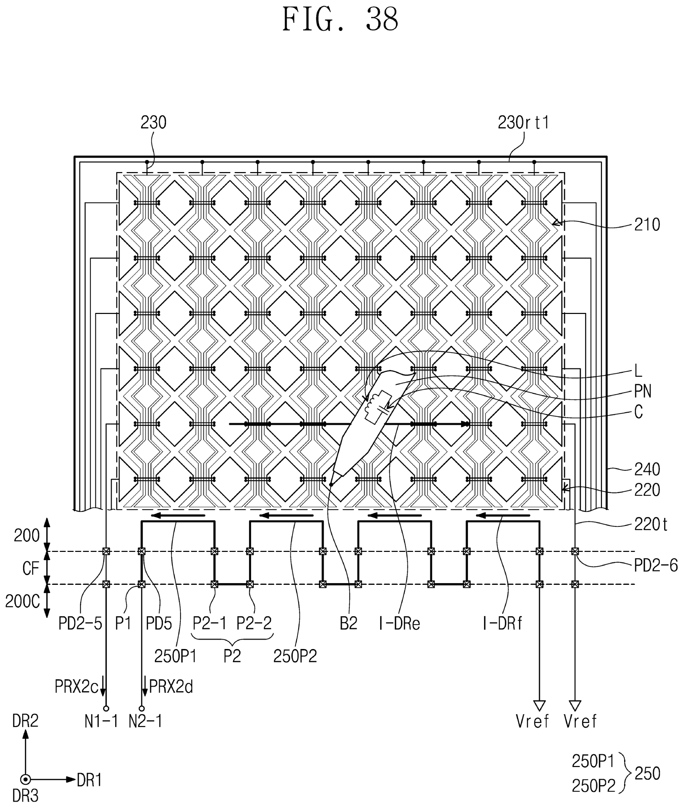

FIG. 38 illustrates a sensor layer and a sensor driving unit for describing a second mode according to an embodiment of the present disclosure.

Referring to FIGS. 15 and 38, the pen PN may be disposed in a third position B2. The pen PN may be disposed adjacent to the boundary of the active area 200A and the non-active area 200NA, which is at a lower end of the active area 200A.

In a plan view, a fifth induced currents I-DRe may be formed at the second electrodes 220, which are located on the upper side with respect to the pen PN, in the first direction DR1. A sixth induced current I-DRf may be formed at the lower-end electrode 250, which is located on the lower side with respect to the pen PN, in the direction facing away from the first direction DR1.

The sensor driving unit 200C may receive second sensing signals PRX2c and PRX2d, which are based on the induced currents I-DRe and I-DRf.

The lower-end electrode 250 may include the plurality of electrode portions 250P1 and 250P2. The plurality of electrode portions 250P1 and 250P2 may be respectively connected to the plurality of fifth pads PD5. The plurality of fifth pads PD5 may be respectively connected to the plurality of connection films CF. The first connection pad P1 may be connected to the (2-1)-th node N2-1.

The plurality of second connection pads P2 may include the first sub-pad P2-1 and the second sub-pad P2-2, the first sub-pad P2-1 may be connected to the first electrode portion 250P1, and the second sub-pad P2-2 may be connected to the second electrode portion 250P2. The first sub-pad P2-1 and the second sub-pad P2-2 may be connected to each other.

The plurality of second pads PD2 may include a (2-5)-th pad PD2-5 and a (2-6)-th pad PD2-6. The (2-5)-th pad PD2-5 may be connected to the (1-1)-th node N1-1, and the reference voltage Vref may be provided to the (2-6)-th pad PD2-6. The reference voltage Vref may have a given voltage level. However, this is provided as an example. The ground voltage may be provided to the (2-6)-th pad PD2-6 according to one or more embodiments of the present disclosure.

Each of the (1-1)-th node N1-1 and the (2-1)-th node N2-1 may be connected to the first sensing part SP (refer to FIG. 25A), or the (1-1)-th node N1-1 and the (2-1)-th node N2-1 may be connected to the second sensing part SPa (refer to FIG. 25B).

The (1-1)-th node N1-1 may receive a (2-3)-th sensing signal PRX2c, and the (2-1)-th node N2-1 may receive a (2-4)-th sensing signal PRX2d.

The sensor driving unit 200C may calculate a sensing current for each channel or for a differential channel by using the second sensing signals PRX2c and PRX2d. The sensing current may correspond to the second sensing signals PRX2c and PRX2d. The sensor driving unit 200C may detect y-coordinate information of the pen PN based on the second sensing signals PRX2c and PRX2d.

The lower-end electrode 250 may have the solid structure. A third resistance of the lower-end electrode 250 may be greater than the second resistance of each of the plurality of second electrodes 220. According to the above description, the third resistance of the lower-end electrode 250 may be similar to a total resistance of each of the plurality of second electrodes 220 and the plurality of second trace lines 220t connected thereto.

The maximum width of the lower-end electrode 250 may be greater than the maximum width WD1 (refer to FIG. 11) of each of the plurality of second trace lines 220t. For example, the capacitance of the lower-end electrode 250 may be greater than the capacitance of each of the plurality of second trace lines 220t. The capacitance of the lower-end electrode 250 may be similar to a total capacitance of each of the plurality of second electrodes 220 and the plurality of second trace lines 220t connected thereto.

According to the present disclosure, a third impedance acting on the (1-1)-th node N1-1 may be similar to a fourth impedance acting on the (2-1)-th node N2-1. Impedance matching may be made between the (2-1)-th node N2-1 connected to the lower-end electrode 250 and the (1-1)-th node N1-1 connected to each of the plurality of second electrodes 220 and the plurality of second trace lines 220t connected thereto. It may be easy to perform differential sensing on the (2-3)-th sensing signal PRX2c and the (2-4)-th sensing signal PRX2d by using the second sensing part SPa (refer to FIG. 25B). Accordingly, the electronic device ED (refer to FIG. 7) with improved sensing reliability may be provided.

According to the above description, a first impedance of an outer electrode may be similar to a second impedance of each of a plurality of second electrodes and a plurality of trace lines connected thereto. Impedance matching may be made between a node connected to the outer electrode and a node connected to each of the plurality of second electrodes and the plurality of trace lines connected thereto. Differential sensing on a (2-1)-th sensing signal and a (2-2)-th sensing signal may be easily performed in a sensing part. Accordingly, an electronic device with improved sensing reliability may be provided.

Also, according to the above description, a signal sensed by second sensing signals of the outer electrode and the first second electrode may have a first signal magnitude. The first signal magnitude may be greater than a second signal magnitude of a signal sensed at the boundary of an active area and a non-active area when the outer electrode is not included. Accordingly, an electronic device in which coordinate reliability is improved at the boundary of the active area and the non-active area may be provided.

While the present disclosure has been described with reference to embodiments thereof, it will be apparent to those of ordinary skill in the art that various changes and modifications may be made thereto without departing from the scope of the present disclosure as set forth in the following claims.

Embodiments are set out in the following clauses:
1. An electronic device comprising:
   a display layer;
   a sensor layer on the display layer, wherein an active area and a non-active area are in the display layer; and
   a sensor driving unit configured to drive the sensor layer,
   wherein the sensor layer comprises:
      a plurality of first electrodes in the active area and extending in a first direction;
      a plurality of second electrodes in the active area and extending in a second direction intersecting the first direction;
      a plurality of auxiliary electrodes in the active area, extending in the first direction, and insulated from the plurality of second electrodes; and
      an outer electrode in the non-active area and around a portion of the active area,
      wherein the sensor driving unit is configured to operate in a first mode of sensing a touch or in a second mode of sensing an external input device,
      wherein the second mode comprises a charging mode and a sensing mode, and
      wherein, in the sensing mode, the sensor driving unit is configured to receive a first sensing signal through one of the plurality of second electrodes and to receive a second sensing signal through the outer electrode.
2. The electronic device of clause 1, wherein, in the sensing mode, the sensor driving unit is configured to perform differential sensing on the one of the plurality of second electrodes and the outer electrode.
3. The electronic device of clause 1 or clause 2, wherein each of the plurality of second electrodes has a mesh structure, and
   wherein the outer electrode has a solid structure.
4. The electronic device of any preceding clause, wherein the sensor layer further comprises:
   a plurality of trace lines in the non-active area and respectively connected to the plurality of second electrodes.
5. The electronic device of clause 4, wherein a maximum width of the outer electrode is greater than a maximum width of each of the plurality of trace lines.
6. The electronic device of clause 4 or clause 5, wherein a first resistance of the outer electrode is greater than a second resistance of the one of the plurality of second electrodes.
7. The electronic device of any preceding clause, wherein the sensor layer further comprises:
   a lower-end electrode in the non-active area and located adjacent to a remaining portion of the active area.
8. The electronic device of clause 7, further comprising:
   a main circuit board on which the sensor driving unit is mounted;
   a first connection film electrically connected between the main circuit board and the sensor layer and comprising a plurality of first pads connected to the main circuit board; and
   a second connection film electrically connected between the main circuit board and the sensor layer and comprising a plurality of second pads connected to the main circuit board.
9. The electronic device of clause 8, wherein the lower-end electrode comprises a plurality of electrode portions arranged along the second direction, and
   wherein the plurality of electrode portions are electrically connected to each other.
10. The electronic device of clause 9, wherein a first end of one of the plurality of electrode portions is connected to one of the plurality of first pads, and a second end of the one of the plurality of electrode portions is connected to one of the plurality of second pads, and
   wherein a first end of another one of the plurality of electrode portions is connected to another one of the plurality of second pads.
11. The electronic device of clause 10, wherein the one and the another one of the plurality of second pads are connected and adjacent to each other.
12. The electronic device of clause 10 or clause 11, wherein the main circuit board comprises a connection line connecting the one and the another one of the plurality of second pads.
13. The electronic device of any of clauses 8 to 12, wherein the first connection film and the second connection film are spaced from each other in the second direction,
   wherein a first end of the lower-end electrode is connected to one of the plurality of first pads, and
   wherein a second end of the lower-end electrode is connected to one of the plurality of second pads.
14. The electronic device of any preceding clause, wherein the sensor layer further comprises a blocking electrode.
15. The electronic device of clause 14, wherein the blocking electrode is around the outer electrode.
16. The electronic device of clause 14 or clause 15, wherein, in a plan view, the blocking electrode overlaps the outer electrode.
17. The electronic device of any of clauses 14 to 16, wherein the blocking electrode comprises a plurality of blocking electrodes, and
   wherein the plurality of blocking electrodes are spaced from each other in the second direction.
18. The electronic device of any preceding clause, wherein, in the first mode and the charging mode, a ground voltage is provided to the outer electrode.
19. An electronic device comprising:
   a display layer; and
   a sensor layer on the display layer, wherein an active area and a non-active area are in the display layer,
   wherein the sensor layer comprises:
      a plurality of first electrodes in the active area and extending in a first direction;
      a plurality of second electrodes in the active area and extending in a second direction intersecting the first direction;
      a plurality of auxiliary electrodes in the active area, extending in the first direction, and insulated from the plurality of second electrodes; and
      an outer electrode in the non-active area and around a portion of the active area,
      wherein each of the plurality of second electrodes has a mesh structure,
      wherein the outer electrode has a solid structure, and
      wherein a first resistance of the outer electrode is greater than a second resistance of each of the plurality of second electrodes.
20. The electronic device of clause 19, wherein the sensor layer further comprises:
   a plurality of trace lines in the non-active area and respectively connected to the plurality of second electrodes, and
   wherein a maximum width of the outer electrode is greater than a maximum width of each of the plurality of trace lines.

## Claims

1. An electronic device comprising:
a display layer (100);
a sensor layer (200) on the display layer (100), wherein an active area (200A) and a non-active area (200NA) are in the display layer (100); and
a sensor driving unit (200C) configured to drive the sensor layer (200),
wherein the sensor layer (200) comprises:
a plurality of first electrodes (210) in the active area (200A) and extending in a first direction (DR2);
a plurality of second electrodes (220) in the active area (200A) and extending in a second direction (DR1) intersecting the first direction (DR2);
a plurality of auxiliary electrodes (230) in the active area (200A), extending in the first direction (DR2), and insulated from the plurality of second electrodes (220); and
an outer electrode (240) in the non-active area (200NA) and around a portion of the active area (200A),
wherein the sensor driving unit (200C) is configured to operate in a first mode of sensing a touch or in a second mode of sensing an external input device (PN),
wherein the second mode comprises a charging mode and a sensing mode, and
wherein, in the sensing mode, the sensor driving unit (200C) is configured to receive a first sensing signal through one of the plurality of second electrodes (220) and to receive a second sensing signal through the outer electrode (240).

2. The electronic device of claim 1, wherein, in the sensing mode, the sensor driving unit (200C) is configured to perform differential sensing on the one of the plurality of second electrodes (220) and the outer electrode (240).

3. The electronic device of claim 1 or claim 2, wherein each of the plurality of second electrodes (220) has a mesh structure, and
wherein the outer electrode (240) has a solid structure.

4. The electronic device of any preceding claim, wherein the sensor layer (200) further comprises:
a plurality of trace lines (210t) in the non-active area (200NA) and respectively connected to the plurality of second electrodes (220),
and optionally wherein a maximum width (WD2) of the outer electrode (240) is greater than a maximum width (WD1) of each of the plurality of trace lines (220t).

5. The electronic device of claim 4, wherein a first resistance of the outer electrode (240) is greater than a second resistance of the one of the plurality of second electrodes (220).

6. The electronic device of any preceding claim, wherein the sensor layer (200) further comprises:
a lower-end electrode (250) in the non-active area (200NA) and located adjacent to a remaining portion of the active area (200A).

7. The electronic device of claim 6, further comprising:
a main circuit board (MPCB) on which the sensor driving unit (200C) is mounted;
a first connection film (CF1) electrically connected between the main circuit board (MPCB) and the sensor layer (200) and comprising a plurality of first pads (P1) connected to the main circuit board (MPCB); and
a second connection film (CF2) electrically connected between the main circuit board (MPCB) and the sensor layer (200) and comprising a plurality of second pads (P2) connected to the main circuit board (MPCB).

8. The electronic device of claim 7, wherein the lower-end electrode (250) comprises a plurality of electrode portions (250P1, 250P2) arranged along the second direction (DR1), and
wherein the plurality of electrode portions (250P1, 250P2) are electrically connected to each other.

9. The electronic device of claim 8, wherein a first end of one of the plurality of electrode portions (250P1) is connected to one of the plurality of first pads (P1), and a second end of the one of the plurality of electrode portions (250P1) is connected to one of the plurality of second pads (P2-1), and
wherein a first end of another one of the plurality of electrode portions (250P2) is connected to another one of the plurality of second pads (P2-2).

10. The electronic device of claim 9, wherein the one (P2-1) and the another one (P2-2) of the plurality of second pads are connected and adjacent to each other.

11. The electronic device of claim 9 or claim 10, wherein the main circuit board (MPCB) comprises a connection line (LL) connecting the one (P2-1) and the another one (P2-2) of the plurality of second pads.

12. The electronic device of any of claims 7 to 11, wherein the first connection film (CF1) and the second connection film (CF2) are spaced from each other in the second direction (DR1),
wherein a first end of the lower-end electrode (250) is connected to one of the plurality of first pads (P1), and
wherein a second end of the lower-end electrode (250) is connected to one of the plurality of second pads (P2).

13. The electronic device of any preceding claim, wherein the sensor layer (200) further comprises a blocking electrode (ESD), and wherein optionally one or more of:
the blocking electrode (ESD) is around the outer electrode (240);
in a plan view, the blocking electrode (ESD) overlaps the outer electrode (240); and
the blocking electrode (ESD) comprises a plurality of blocking electrodes (ESD-1, ESD2), and the plurality of blocking electrodes (ESD-1, ESD-2) are spaced from each other in the second direction (DR1).

14. The electronic device of any preceding claim, configured such that, in the first mode and the charging mode, a ground voltage is provided to the outer electrode (240).

15. An electronic device comprising:
a display layer (100); and
a sensor layer (200) on the display layer (100), wherein an active area (200A) and a non-active area (200NA) are in the display layer (100),
wherein the sensor layer (200) comprises:
a plurality of first electrodes (210) in the active area (200A) and extending in a first direction (DR2);
a plurality of second electrodes (220) in the active area (200A) and extending in a second direction (DR1) intersecting the first direction (DR2);
a plurality of auxiliary electrodes (230) in the active area (200A), extending in the first direction (DR2), and insulated from the plurality of second electrodes (220); and
an outer electrode (240) in the non-active area (200NA) and around a portion of the active area (200A),
wherein each of the plurality of second electrodes (220) has a mesh structure,
wherein the outer electrode (240) has a solid structure, and
wherein a first resistance of the outer electrode (240) is greater than a second resistance of each of the plurality of second electrodes (220).
